(19) Europäisches Patentamt
European Patent Office
Office européen des brevets

(11) **EP 4 637 134 A1**

(12) **EUROPEAN PATENT APPLICATION**
published in accordance with Art. 153(4) EPC

(43) Date of publication:
**22.10.2025 Bulletin 2025/43**

(21) Application number: **24756015.4**

(22) Date of filing: **01.02.2024**

(51) International Patent Classification (IPC):
**H04N 9/68** (2023.01)    **H04N 9/64** (2023.01)

(52) Cooperative Patent Classification (CPC):
**H04N 9/64; H04N 9/68; H04N 23/741**

(86) International application number:
**PCT/CN2024/075284**

(87) International publication number:
**WO 2024/169641 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023  CN 202310172429**

(71) Applicant: **Huawei Technologies Co., Ltd.
Shenzhen, Guangdong 518129 (CN)**

(72) Inventors:
• XU, Weiwei
  Shenzhen, Guangdong 518129 (CN)
• YU, Quanhe
  Shenzhen, Guangdong 518129 (CN)
• WANG, Yichuan
  Shenzhen, Guangdong 518129 (CN)
• WEN, Jinsong
  Shenzhen, Guangdong 518129 (CN)

(74) Representative: **Eisenführ Speiser
Patentanwälte Rechtsanwälte PartGmbB
Johannes-Brahms-Platz 1
20355 Hamburg (DE)**

(54) **TONE MAPPING METHOD AND APPARATUS**

(57)    This application provides a tone mapping method and apparatus. In the method, after global tone mapping is performed on a to-be-displayed image, local mapping information is adjusted to obtain the adjusted local mapping information; and based on the adjusted local mapping information, local tone mapping is performed on at least some pixels in the to-be-displayed image on which global tone mapping is performed. In embodiments of this application, a global and local joint tone mapping solution is used, and local mapping is performed based on the adjusted local mapping information, to balance an uncoordinated contrast between different regions in local tone mapping, and effectively improve tone mapping effect and display effect of an image.

```
┌─────────────────────────────────────────────────────┐
│         Obtain a to-be-displayed image              │ ⌇ S501
└─────────────────────────────────────────────────────┘
                          ↓
┌─────────────────────────────────────────────────────┐
│ Perform global tone mapping on the to-be-displayed  │ ⌇ S502
│ image to obtain a first tone-mapped image           │
└─────────────────────────────────────────────────────┘
                          ↓
┌─────────────────────────────────────────────────────┐
│ Obtain local mapping information of the first        │ ⌇ S503
│ tone-mapped image                                    │
└─────────────────────────────────────────────────────┘
                          ↓
┌─────────────────────────────────────────────────────┐
│ Adjust the local mapping information to obtain the   │ ⌇ S504
│ adjusted local mapping information                   │
└─────────────────────────────────────────────────────┘
                          ↓
┌─────────────────────────────────────────────────────┐
│ Perform local tone mapping on at least some pixels   │ ⌇ S505
│ in the first tone-mapped image based on the adjusted │
│ local mapping information, to obtain a second        │
│ tone-mapped image                                    │
└─────────────────────────────────────────────────────┘
```

FIG. 5

## Description

This application claims priority to Chinese Patent Application No. 202310172429.8, filed with the China National Intellectual Property Administration on February 17, 2023 and entitled "TONE MAPPING METHOD AND APPARATUS", which is incorporated herein by reference in its entirety.

## TECHNICAL FIELD

This application relates to the field of display technologies, and in particular, to a tone mapping method and apparatus.

## BACKGROUND

Dynamic range (Dynamic Range) indicates a ratio of a maximum value to a minimum value of a variable in many fields. In a digital image, the dynamic range indicates a ratio of a maximum luminance value to a minimum luminance value in a range in which the image can be displayed. In a same scene in the real world, the dynamic range is usually between $10^{-3}$ candela/$m^2$ (cd/$m^2$) and $10^6$ cd/$m^2$. A high dynamic range video technology expands a luminance range of an image that can be displayed, so that information about a large luminance range in the real world can be recorded, and more details of bright and dark parts in the image can be displayed. However, luminance of a video or an image usually does not match a luminance range that can be displayed by a standard dynamic range (standard dynamic range, SDR) display device or a large quantity of other existing HDR display devices.

Therefore, when the video or the image is displayed on an existing display device, the luminance of the video or the image needs to be processed based on a display capability of the display device, so that the luminance of the video or the image matches a luminance range that can be displayed by the display device. This process is referred to as tone mapping (tone mapping, TM).

Tone mapping methods are classified into global tone mapping (global tone mapping, GTM) and local tone mapping (local tone mapping, LTM). Global tone mapping (global tone mapping, GTM) means that a same tone mapping manner is used for an entire image, and has disadvantages of an insufficient adjustment capability and a lack of ability to show an image contrast and details. Local tone mapping (local tone mapping, LTM) means that different tone mapping processing is performed on pixels at different locations, has a strong ability to show image details, but has a disadvantage of an uncoordinated global contrast. Therefore, when tone mapping is performed on the image by using an existing tone mapping solution, there are still problems such as unsatisfactory tone mapping effect, an uncoordinated overall contrast of the image, and poor display effect.

## SUMMARY

This application provides a tone mapping method and apparatus, to improve contrast coordination of an entire tone-mapped image.

According to a first aspect, an embodiment of this application provides a tone mapping method. The method includes: obtaining a to-be-displayed image; performing global tone mapping on the to-be-displayed image to obtain a first tone-mapped image; obtaining local mapping information of the first tone-mapped image; adjusting the local mapping information to obtain the adjusted local mapping information; and performing local tone mapping on at least some pixels in the first tone-mapped image based on the adjusted local mapping information, to obtain a second tone-mapped image.

In this embodiment of this application, a tone mapping solution combining global tone mapping and local tone mapping is used. First, global tone mapping is performed to ensure consistency of overall luminance perception of an image, and then local tone mapping is performed to further improve a local contrast of the image. In addition, local tone mapping is performed based on the adjusted local mapping information. This adjustment helps balance a problem of an uncoordinated regional contrast caused by local tone mapping, and further improves local tone mapping effect. This effectively improves image display effect.

In a possible implementation, obtaining the local mapping information of the first tone-mapped image includes: obtaining at least one initial local tone mapping curve and at least one feature value of the first tone-mapped image, where each of the at least one initial local tone mapping curve corresponds to one or more feature values.

In a possible implementation, adjusting the local mapping information to obtain the adjusted local mapping information includes: adjusting the at least one initial local tone mapping curve based on the at least one feature value, to obtain the at least one adjusted local tone mapping curve, so that the at least one adjusted local tone mapping curve and a global tone mapping curve used for global tone mapping meet a first condition.

In this implementation, in a process of adjusting, based on the feature value, the initial local tone mapping curve to meet the first condition, local tone mapping performed later is organically associated global tone mapping performed earlier. Luminance and darkness consistency of global tone mapping is used to properly balance a problem of an uncoordinated contrast between different regions in local tone mapping, and alleviate a halo problem caused by the uncoordinated contrast. This can effectively improve tone mapping effect of the image, and further effectively improve display effect of the image.

In a possible implementation, the first condition includes: A mapping value obtained through mapping a first feature value by using the global tone mapping curve is a second feature value, or a value obtained through performing function transformation on a mapping value obtained through mapping a first feature value by using the global tone mapping curve is a second feature value, where the first feature value is any one of the one or more feature values; a mapping value obtained through mapping the second feature value by using an adjusted local tone mapping curve corresponding to the first feature value is a third feature value; and a difference between the second feature value and the third feature value falls within a first range.

In this implementation, due to limitation effect of the difference, the adjusted local tone mapping curve is associated with the global tone mapping curve compared with the initial local tone mapping curve, so that adjusted local tone mapping curves of different block regions maintain luminance and darkness consistency to some extent on the entire image. In this way, consistency is maintained to some extent on the entire image on which local mapping is performed, and the entire image is more coordinated and unified while local mapping details are retained. This effectively improves tone mapping effect and display effect of the image.

In a possible implementation, before adjusting the at least one initial local tone mapping curve, the method further includes: obtaining terminal display device information; and adjusting the at least one initial local tone mapping curve based on the terminal display device information.

In a possible implementation, obtaining the at least one feature value includes: determining at least one block region of the to-be-displayed image; collecting statistics on luminance information of each of the at least one block region; dividing the luminance information of each block region into one or more luminance segments; and using a center or a center of gravity of each of the one or more luminance segments as one of the one or more feature values.

In this implementation, each block region has the one or more luminance segments, and the center or the center of gravity of each luminance segment is the feature value. Therefore, each feature value has a typical feature of the luminance segment, and is representative. The local mapping curve is adjusted based on the feature value, so that the adjusted local tone mapping curve can be smoother, and is more closely related to the global tone mapping curve. This improves tone mapping effect and display effect of the image obtained through local mapping.

In this implementation, when there are a plurality of luminance segments in the block region, that is, there are a plurality of feature values, different feature values reflect features of different luminance segments, and the local mapping curve adjusted based on the plurality of feature values is also on different luminance segments and is affected by the global tone mapping curve. Therefore, consistency of the plurality of luminance segments in the block region can be achieved, and a complex image region can be better processed.

For example, when the block region is divided into two luminance segments: a bright region and a dark region, when the local mapping curve is adjusted based on a feature value of the bright region and a feature value of the dark region, the feature value of the bright region mainly enables a bright region of the local mapping curve to be affected by global tone mapping, and the feature value of the dark region mainly enables a dark region of the local mapping curve to be affected by global tone mapping. Therefore, luminance consistency and coordination between the bright region and the dark region after local mapping of the block region are achieved, and image display can better adapt to a display device. This improves display effect of complex images or complex areas in images, to meet diversified user requirements.

In a possible implementation, obtaining the local mapping information of the first tone-mapped image includes: obtaining metadata of the to-be-displayed image; and obtaining the local mapping information from the metadata.

In a possible implementation, obtaining the local mapping information of the first tone-mapped image includes: obtaining local mapping indication information; and when the local mapping indication information indicates that local mapping is to be applied, determining preset local mapping information or calculating the local mapping information.

In this implementation, whether to apply local mapping may be selected based on the local mapping indication information, to further meet the diversified user requirements. This effectively improves user experience.

In a possible implementation, the at least one adjusted local tone mapping curve is in a one-to-one correspondence with the at least one block region of the first tone-mapped image, and performing local tone mapping on the at least some pixels in the first tone-mapped image based on the adjusted local mapping information, to obtain the second tone-mapped image includes: separately performing, based on the at least one adjusted local tone mapping curve, local tone mapping on block regions respectively corresponding to the at least one adjusted local tone mapping curve, to obtain the second tone-mapped image.

In this implementation, local tone mapping is performed, based on the adjusted local tone mapping curve, on the block region corresponding to the adjusted local tone mapping curve. The adjusted local tone mapping curve is affected by global tone mapping while retaining a local detail. In this way, the block region obtained through local tone mapping is better fused with the entire image, the entire image is more coordinated, and operations such as deblocking filtering do not need to be performed. This improves display effect and reducing algorithm complexity.

In a possible implementation, performing local tone mapping on the at least some pixels in the first tone-mapped image based on the adjusted local mapping information, to obtain the second tone-mapped image includes: determining a to-be-processed pixel of the first tone-mapped image; determining an extraction region based on the to-be-processed pixel, where the extraction region covers at least some of the at least one block region; obtaining the at least one adjusted local tone mapping curve corresponding to the at least some of the block regions; and performing local tone mapping on the to-be-processed pixel based on the at least one adjusted local tone mapping curve, to obtain the second tone-mapped image.

In this implementation, the local tone mapping curve including the block region in which the to-be-processed pixel is located and another adjacent or similar block region is selected by using the extraction region. Local tone mapping is performed on the to-be-processed pixel based on a plurality of local tone mapping curves corresponding to a plurality of block regions. This reduces a problem that a contrast between different block regions is uncoordinated when different local tone mapping curves are used to perform local tone mapping in different block regions, and further improves image tone mapping effect.

In a possible implementation, performing local tone mapping on the to-be-processed pixel based on the at least one adjusted local tone mapping curve includes: performing local tone mapping on the to-be-processed pixel based on a plurality of adjusted local tone mapping curves to obtain a plurality of mapping values; and performing weighted averaging on the plurality of mapping values to obtain a mapping value of the to-be-processed pixel.

In this implementation, when local tone mapping is performed on the to-be-processed pixel based on the plurality of adjusted local tone mapping curves, weighted averaging is performed on the obtained plurality of mapping values to obtain a final mapping value. Impact of the plurality of mapping values on the final mapping value is rationalized in a weighted averaging manner. This further reduces a problem of the uncoordinated contrast between the different block regions caused by local tone mapping performed by using the different local tone mapping curves for the different block regions, and effectively improves image tone mapping effect.

In a possible implementation, local tone mapping includes layer-based local tone mapping, block-based local tone mapping, or a combination of layer-based local tone mapping and block-based local tone mapping.

Specifically, local tone mapping includes layer-based local tone mapping in which an image is divided into a plurality of layers for mapping, or block-based local tone mapping in which an image is divided into a plurality of blocks for mapping, or local tone mapping in which layer-based local tone mapping and block-based local tone mapping are combined. A combination manner of layer-based local tone mapping and block-based local tone mapping includes: first performing block-based local tone mapping, and then performing layer-based local tone mapping; or first performing layer-based local tone mapping, and then performing block-based local tone mapping; or the image is first divided into a plurality of layers, and then block-based local tone mapping is performed on each layer.

According to a second aspect, an embodiment of this application provides an image encoding method. The method includes: writing a to-be-displayed image into a bitstream; and writing local mapping information of the to-be-displayed image into the bitstream, where adjusted local mapping information is used to perform local tone mapping on at least some pixels in the to-be-displayed image on which global tone mapping is performed.

In this embodiment of this application, a tone mapping solution combining global tone mapping and local tone mapping is used. First, global tone mapping is performed to ensure consistency of overall luminance perception of an image, and then local tone mapping is performed to further improve a local contrast of the image. In addition, local tone mapping is performed based on the adjusted local mapping information. This adjustment helps balance a problem of an uncoordinated regional contrast caused by local tone mapping, and further improves local tone mapping effect. This effectively improves image display effect.

In a possible implementation, writing the local mapping information of the to-be-displayed image into the bitstream includes: writing at least one initial local tone mapping curve and at least one feature value of the to-be-displayed image into the bitstream, where each of the at least one initial local tone mapping curve corresponds to one or more feature values.

In a possible implementation, the at least one adjusted local tone mapping curve is in a one-to-one correspondence with at least one block region of the to-be-displayed image.

In a possible implementation, the at least one feature value is used to adjust the at least one initial local tone mapping curve to obtain the at least one adjusted local tone mapping curve, and the at least one adjusted local tone mapping curve and a global tone mapping curve used for global tone mapping meet a first condition.

In this implementation, in a process of adjusting, based on the feature value, the initial local tone mapping curve to meet the first condition, local tone mapping performed later is organically associated global tone mapping performed earlier. Luminance and darkness consistency of global tone mapping is used to properly balance a problem of an uncoordinated contrast between different regions in local tone mapping, and alleviate a halo problem caused by the uncoordinated contrast. This can effectively improve tone mapping effect of the image, and further effectively improve display effect of the image.

**EP 4 637 134 A1**

In a possible implementation, the first condition includes: A mapping value obtained through mapping a first feature value by using the global tone mapping curve is a second feature value, or a value obtained through performing function transformation on a mapping value obtained through mapping a first feature value by using the global tone mapping curve is a second feature value, where the first feature value is any one of the one or more feature values; a mapping value obtained through mapping the second feature value by using the adjusted local tone mapping curve corresponding to the first feature value is a third feature value; and a difference between the second feature value and the third feature value falls within a first range.

In this implementation, due to limitation effect of the difference, the adjusted local tone mapping curve is associated with the global tone mapping curve compared with the initial local tone mapping curve, so that adjusted local tone mapping curves of different block regions maintain luminance and darkness consistency to some extent on the entire image. In this way, consistency is maintained to some extent on the entire image on which local mapping is performed, and the entire image is more coordinated and unified while local mapping details are retained. This effectively improves tone mapping effect and display effect of the image.

In a possible implementation, the method further includes: determining at least one block region of the to-be-displayed image; collecting statistics on luminance information of each of the at least one block region; dividing the luminance information of each block region into one or more luminance segments; and using a center or a center of gravity of each of the one or more luminance segments as one of the one or more feature values.

In this implementation, each block region has the one or more luminance segments, and the center or the center of gravity of each luminance segment is the feature value. Therefore, each feature value has a typical feature of the luminance segment, and is representative. The local mapping curve is adjusted based on the feature value, so that the adjusted local tone mapping curve can be smoother, and is more closely related to the global tone mapping curve. This improves tone mapping effect and display effect of the image obtained through local mapping.

In this implementation, when there are a plurality of luminance segments in the block region, that is, there are a plurality of feature values, different feature values reflect features of different luminance segments, and the local mapping curve adjusted based on the plurality of feature values is also on different luminance segments and is affected by the global tone mapping curve. Therefore, consistency of the plurality of luminance segments in the block region can be achieved, and a complex image region can be better processed.

For example, when the block region is divided into two luminance segments: a bright region and a dark region, when the local mapping curve is adjusted based on a feature value of the bright region and a feature value of the dark region, the feature value of the bright region mainly enables a bright region of the local mapping curve to be affected by global tone mapping, and the feature value of the dark region mainly enables a dark region of the local mapping curve to be affected by global tone mapping. Therefore, luminance consistency and coordination between the bright region and the dark region after local mapping of the block region are achieved, and image display can better adapt to a display device. This improves display effect of complex images or complex areas in images, to meet diversified user requirements.

In a possible implementation, the method further includes: writing division information into the bitstream, where the division information is used to determine the at least one block region of the to-be-displayed image.

In a possible implementation, the method further includes: writing local mapping indication information into the bitstream, where the local mapping indication information indicates whether local mapping is to be applied.

In a possible implementation, local tone mapping includes layer-based local tone mapping, block-based local tone mapping, or a combination of layer-based local tone mapping and block-based local tone mapping.

Specifically, local tone mapping includes layer-based local tone mapping in which an image is divided into a plurality of layers for mapping, or block-based local tone mapping in which an image is divided into a plurality of blocks for mapping, or local tone mapping in which layer-based local tone mapping and block-based local tone mapping are combined. A combination manner of layer-based local tone mapping and block-based local tone mapping includes: first performing block-based local tone mapping, and then performing layer-based local tone mapping; or first performing layer-based local tone mapping, and then performing block-based local tone mapping; or the image is first divided into a plurality of layers, and then block-based local tone mapping is performed on each layer.

According to a third aspect, an embodiment of this application provides a tone mapping apparatus, including modules configured to perform the method according to any one of the first aspect or the possible implementations of the first aspect.

For example, the apparatus may include:

a receiving module, configured to obtain a to-be-displayed image;
a global tone mapping module, configured to perform global tone mapping on the to-be-displayed image to obtain a first tone-mapped image;
a local tone mapping module, configured to obtain local mapping information of the first tone-mapped image;
an adjustment module, configured to adjust the local mapping information to obtain the adjusted local mapping information; and

5

the local tone mapping module is further configured to perform local tone mapping on at least some pixels in the first tone-mapped image based on the adjusted local mapping information, to obtain a second tone-mapped image.

In a possible implementation, obtaining the local mapping information of the first tone-mapped image includes: obtaining at least one initial local tone mapping curve and at least one feature value of the first tone-mapped image, where each of the at least one initial local tone mapping curve corresponds to one or more feature values.

In a possible implementation, adjusting the local mapping information to obtain the adjusted local mapping information includes: adjusting the at least one initial local tone mapping curve based on the at least one feature value, to obtain the at least one adjusted local tone mapping curve, so that the at least one adjusted local tone mapping curve and a global tone mapping curve used for global tone mapping meet a first condition.

In a possible implementation, the first condition includes: A mapping value obtained through mapping a first feature value by using the global tone mapping curve is a second feature value, or a value obtained through performing function transformation on a mapping value obtained through mapping a first feature value by using the global tone mapping curve is a second feature value, where the first feature value is any one of the one or more feature values; a mapping value obtained through mapping the second feature value by using an adjusted local tone mapping curve corresponding to the first feature value is a third feature value; and a difference between the second feature value and the third feature value falls within a first range.

In a possible implementation, before adjusting the at least one initial local tone mapping curve based on the at least one feature value, the method further includes: obtaining terminal display device information; and adjusting the at least one initial local tone mapping curve based on the terminal display device information.

In a possible implementation, obtaining the at least one feature value includes: determining at least one block region of the to-be-displayed image; collecting statistics on luminance information of each of the at least one block region; dividing the luminance information of each block region into one or more luminance segments; and using a center or a center of gravity of each of the one or more luminance segments as one of the one or more feature values.

In a possible implementation, obtaining the local mapping information of the first tone-mapped image includes: obtaining metadata of the to-be-displayed image; and obtaining the local mapping information from the metadata.

In a possible implementation, obtaining the local mapping information of the first tone-mapped image includes: obtaining local mapping indication information; and when the local mapping indication information indicates that local mapping is to be applied, determining preset local mapping information or calculating the local mapping information.

In a possible implementation, the at least one adjusted local tone mapping curve is in a one-to-one correspondence with the at least one block region of the first tone-mapped image, and performing local tone mapping on the at least some pixels in the first tone-mapped image based on the adjusted local mapping information, to obtain the second tone-mapped image includes: separately performing, based on the at least one adjusted local tone mapping curve, local tone mapping on block regions respectively corresponding to the at least one adjusted local tone mapping curve, to obtain the second tone-mapped image.

In a possible implementation, performing local tone mapping on the at least some pixels in the first tone-mapped image based on the adjusted local mapping information, to obtain the second tone-mapped image includes: determining a to-be-processed pixel of the first tone-mapped image; determining an extraction region based on the to-be-processed pixel, where the extraction region covers at least some of the at least one block region; obtaining the at least one adjusted local tone mapping curve corresponding to the at least some of the block regions; and performing local tone mapping on the to-be-processed pixel based on the at least one adjusted local tone mapping curve, to obtain the second tone-mapped image.

In a possible implementation, performing local tone mapping on the to-be-processed pixel based on the at least one adjusted local tone mapping curve includes: performing local tone mapping on the to-be-processed pixel based on a plurality of adjusted local tone mapping curves to obtain a plurality of mapping values; and performing weighted averaging on the plurality of mapping values to obtain a mapping value of the to-be-processed pixel.

In a possible implementation, local tone mapping includes layer-based local tone mapping, block-based local tone mapping, or a combination of layer-based local tone mapping and block-based local tone mapping.

It should be understood that the third aspect corresponds to the technical solution in the first aspect. Therefore, beneficial effect obtained in the possible implementations is similar, and details are not described herein again.

According to a fourth aspect, an embodiment of this application provides an image encoding apparatus. The apparatus includes modules configured to perform the method according to any one of the second aspect or the possible implementations of the second aspect.

For example, the apparatus may include:

an encoding module, configured to write a to-be-displayed image into a bitstream;
the encoding module is further configured to write local mapping information of the to-be-displayed image into the bitstream, where

adjusted local mapping information is used to perform local tone mapping on at least some pixels in the to-be-displayed image on which global tone mapping is performed; and

a sending module, configured to send the bitstream.

In a possible implementation, writing the local mapping information of the to-be-displayed image into the bitstream includes: writing at least one initial local tone mapping curve and at least one feature value of the to-be-displayed image into the bitstream, where each of the at least one initial local tone mapping curve corresponds to one or more feature values.

In a possible implementation, the at least one adjusted local tone mapping curve is in a one-to-one correspondence with at least one block region of the to-be-displayed image.

In a possible implementation, the at least one feature value is used to adjust the at least one initial local tone mapping curve to obtain the at least one adjusted local tone mapping curve, and the at least one adjusted local tone mapping curve and a global tone mapping curve used for global tone mapping meet a first condition.

In a possible implementation, the first condition includes: A mapping value obtained through mapping a first feature value by using the global tone mapping curve is a second feature value, or a value obtained through performing function transformation on a mapping value obtained through mapping a first feature value by using the global tone mapping curve is a second feature value, where the first feature value is any one of the one or more feature values; a mapping value obtained through mapping the second feature value by using an adjusted local tone mapping curve corresponding to the first feature value is a third feature value; and a difference between the second feature value and the third feature value falls within a first range.

In a possible implementation, the encoding module is further configured to: determine at least one block region of the to-be-displayed image; collect statistics on luminance information of each of the at least one block region; divide the luminance information of each block region into one or more luminance segments; and use a center or a center of gravity of each of the one or more luminance segments as one of the one or more feature values.

In a possible implementation, the encoding module is further configured to write division information into the bitstream, where the division information is used to determine the at least one block region of the to-be-displayed image.

In a possible implementation, the encoding module is further configured to write local mapping indication information into the bitstream, where the local mapping indication information indicates whether local mapping is to be applied.

In a possible implementation, local tone mapping includes layer-based local tone mapping, block-based local tone mapping, or a combination of layer-based local tone mapping and block-based local tone mapping.

It should be understood that the fourth aspect corresponds to the technical solution in the second aspect. Therefore, beneficial effect obtained in the possible implementations is similar, and details are not described herein again.

According to a fifth aspect, an embodiment of this application provides an electronic device, including a memory and a processor that are coupled to each other. The processor invokes program code stored in the memory, to perform the method according to any one of the first aspect or the possible implementations of the first aspect.

It should be understood that for details of technical effect that can be achieved in the fifth aspect, refer to the descriptions of technical effect brought by any one of the first aspect or the possible implementations of the first aspect. Details are not described herein again.

According to a sixth aspect, an embodiment of this application provides an electronic device, including a memory and a processor that are coupled to each other. The processor invokes program code stored in the memory to perform the method according to any one of the second aspect or the possible implementations of the second aspect.

It should be understood that for details of technical effect that can be achieved in the sixth aspect, refer to the descriptions of technical effect brought by any one of the second aspect or the possible implementations of the second aspect. Details are not described herein again.

According to a seventh aspect, an embodiment of this application provides a computer-readable storage medium, including a program or instructions. When the program or the instructions are run on a computer, the method according to any one of the first aspect or the possible implementations of the first aspect is performed, or the method according to any one of the second aspect or the possible implementations of the second aspect is performed.

It should be understood that for details of technical effect that can be achieved in the seventh aspect, refer to the descriptions of technical effect brought by any one of the first aspect or the possible implementations of the first aspect, or any one of the second aspect or the possible implementations of the second aspect. Details are not described herein again.

According to an eighth aspect, an embodiment of this application provides a computer program product, including a program or instructions. When the program or the instructions are run on a computer, the method according to any one of the first aspect or the possible implementations of the first aspect is performed, or the method according to any one of the second aspect or the possible implementations of the second aspect is performed.

It should be understood that, for details of technical effect that can be achieved in the eighth aspect, refer to descriptions of technical effect brought by any one of the first aspect or the possible implementations of the first aspect or any one of the second aspect or the possible implementations of the second aspect. Details are not described herein again.

## BRIEF DESCRIPTION OF DRAWINGS

FIG. 1 is a block diagram of an encoding and decoding system applied in an embodiment of this application;
FIG. 2A is a block diagram of a content providing system for implementing a content delivery service applied in an embodiment of this application;
FIG. 2B is a diagram of an example structure of a terminal device 2106 in FIG. 2A;
FIG. 3A is a diagram of a working procedure of a streaming media system applied in an embodiment of this application;
FIG. 3B is a diagram of an architecture of a streaming media system applied in an embodiment of this application;
FIG. 4A is a diagram of a possible system architecture applicable to an embodiment of this application;
FIG. 4B is a diagram of a structure of an image processing system according to an embodiment of this application;
FIG. 5 is a schematic flowchart of a tone mapping method according to an embodiment of this application;
FIG. 6 is a schematic flowchart of a feature value obtaining method according to an embodiment of this application;
FIG. 7 is a diagram of a method for determining a block region according to an embodiment of this application;
FIG. 8 is a luminance histogram of a block region according to an embodiment of this application;
FIG. 9 is an example diagram of an initial local tone mapping curve according to an embodiment of this application;
FIG. 10 is an example diagram of an adjusted local tone mapping curve according to an embodiment of this application;
FIG. 11 is a schematic flowchart of a block-based local tone mapping method according to an embodiment of this application;
FIG. 12 is an example diagram of a block-based local tone mapping method according to an embodiment of this application;
FIG. 13 is a schematic flowchart of a layer-based local tone mapping method according to an embodiment of this application;
FIG. 14 is a schematic flowchart of a layer and block-combined local tone mapping method according to an embodiment of this application;
FIG. 15 is a schematic flowchart of an image encoding method according to an embodiment of this application;
FIG. 16 is a diagram of a structure of a tone mapping apparatus according to an embodiment of this application;
FIG. 17 is a diagram of a structure of an image encoding apparatus according to an embodiment of this application;
FIG. 18 is a diagram of a structure of an electronic device according to an embodiment of this application; and
FIG. 19 is a diagram of a structure of another electronic device according to an embodiment of this application.

## DESCRIPTION OF EMBODIMENTS

In embodiments of this application, the term "at least one" indicates one or more, and "a plurality of" indicates two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one of a, b, or c may indicate a, b, c, a-b, a-c, b-c, or a-b-c, where any one of a, b, c, a-b, a-c, b-c, or a-b-c may include a single a, a single b, and a single c, or may include a plurality of a, a plurality of b, and a plurality of c.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first priority criterion and a second priority criterion are merely used to distinguish different criteria, and are not used to indicate different content, priorities, or importance degrees of the two types of criteria.

In addition, the terms "include" and "have" in embodiments of this application, the claims, and the accompanying drawings are not exclusive. For example, a process, a method, a system, a product, or a device including a series of steps or modules/units is not limited to the listed steps or modules, and may further include steps or modules/units that are not listed.

For ease of understanding, technical terms in embodiments of this application are first explained.

(1) A dynamic range (dynamic range) is a ratio of maximum luminance to minimum luminance in a video or image signal.

(2) A high dynamic range (high dynamic range, HDR) image is an image whose dynamic range is from 0.001 nits to 10000 nits, where nit is an illumination unit.

(3) A standard dynamic range (standard dynamic range, SDR) is also referred to as a low dynamic range below, and the standard dynamic range image is an image whose dynamic range is typically from 1 nit to 100 nits.

(4) Metadata (metadata) is used to record key information of an image in a scene or frame. In this embodiment of this application, the metadata may further include global mapping information and local mapping information. The local mapping information is, for example, an initial local tone mapping curve and a feature value. The metadata may further include dynamic metadata (dynamic metadata) and static metadata (static metadata). The dynamic metadata may be understood as data (also referred to as attribute information below) associated with each frame of image, and the data may change with different pictures. The static metadata may be understood as data associated with an image sequence, and the data remains unchanged in the image sequence.

(5) Tone mapping (tone mapping) is a process of mapping luminance of an image to a luminance range that can be displayed by a target display device. Specifically, tone mapping may be classified into high-dynamic-to-low-dynamic mapping and low-dynamic-to-high-dynamic mapping. For example, an HDR image includes a 4000-nit illumination signal, but an HDR display capability of the target display device (a television or an iPad) is only 500 nits. Therefore, the 4000-nit signal needs to be mapped to the 500-nit device, that is, a process of tone mapping from high to low. For another example, an SDR image includes a 100-nit SDR signal, and a display capability of the target display device is only 2000 nits. Therefore, the 100-nit signal needs to be mapped to a 2000-nit device, that is, a process of tone mapping from low to high.

(6) An image contrast is measurement of different luminance levels between a brightest feature value and a darkest feature value in a bright area and a dark area of an image, that is, a grayscale contrast of an image. A larger difference indicates a larger contrast, and a smaller difference indicates a smaller contrast. A good contrast ratio of 120:1 can easily display vivid and rich colors, and when the contrast ratio reaches 300:1, colors of all levels can be supported.

(7) A mapping curve is a function curve used to map luminance of an image. The mapping curve in this embodiment of this application may include a Sigmoid function curve, a cubic spline function curve, a Gamma function curve, or the like.

(8) Display adaptation (display adaptation) is tone processing performed on a video or image signal to adapt to a display feature of a target display device.

When the video or the image is displayed on an existing display device, luminance of the video or the image needs to be processed based on a display capability of the display device, so that the luminance of the video or the image matches a luminance range that can be displayed by the display device. This process is referred to as tone mapping. A method for performing tone mapping on the video or the image includes global tone mapping and local tone mapping. Global tone mapping means that a same tone mapping manner is used for an entire image, and has disadvantages of an insufficient adjustment capability and a lack of ability to show an image contrast and details. Local tone means that different tone mapping processing is performed on pixels at different locations, has a strong ability to show image details, but has a disadvantage of an uncoordinated global contrast. Therefore, when tone mapping is performed on the image by using an existing tone mapping solution, there are still problems such as unsatisfactory tone mapping effect, an uncoordinated overall contrast of the image, and poor display effect.

To improve coordination of a contrast of an entire image during tone mapping, this application provides a tone mapping method and apparatus. In the method and apparatus, a tone mapping solution combining global tone mapping and local tone mapping is used, and an initial local tone mapping curve is adjusted based on a feature value. This enables an adjusted tone mapping curve and a global tone mapping curve to meet a first condition. Based on the adjusted local tone mapping curve, local tone mapping is performed on at least some pixels in a to-be-displayed image obtained through global tone mapping. In this embodiment of this application, local tone mapping performed later is organically associated with global tone mapping performed earlier, instead of simply combining. Luminance and darkness consistency of global tone mapping is used to properly balance a problem of an uncoordinated contrast between different regions in local tone mapping, and alleviate a halo problem caused by the uncoordinated contrast. This can effectively improve tone mapping effect of the image, and further effectively improve display effect of the image.

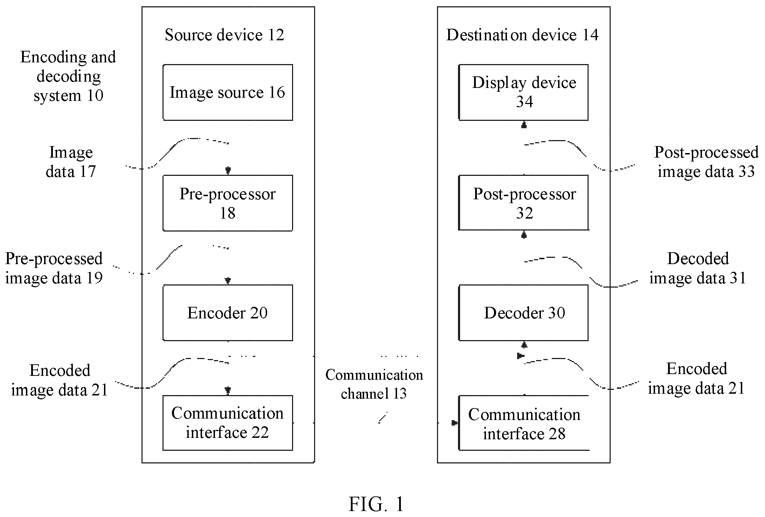

The following describes an encoding and decoding system applied in this application with reference to FIG. 1. FIG. 1 is a block diagram of an encoding and decoding system applied in an embodiment of this application. For example, a video encoding and decoding system 10 (or referred to as an encoding and decoding system 10 for short) that may use technologies in this application. A video encoder 20 (or referred to as an encoder 20 for short) and a video decoder 30 (or referred to as a decoder 30 for short) in the video encoding and decoding system 10 represent devices and the like that may be configured to perform various technologies according to various examples described in this application.

As shown in FIG. 1, the encoding and decoding system 10 includes a source device 12. The source device 12 is configured to provide encoded data 21, such as an encoded image, to a destination device 14 for decoding the encoded data.

The source device 12 includes an encoder 20, and optionally may further include an image source 16, an image pre-processor 18 (or a pre-processing unit), and a communication interface or communication unit 22.

The image source 16 may include or be any kind of image capturing device, for example a camera for capturing a real-world image, and/or any type of an image generating device, for example a computer-graphics processing unit for generating a computer animated image, or any type of other device for obtaining and/or providing a real-world image, a computer generated image (for example, a screen content, a virtual reality (VR) image) and/or any combination thereof (for example, an augmented reality (AR) image). The image source may be any type of memory or storage storing any of the aforementioned images.

In order to distinguish processing performed by the pre-processor 18 or the pre-processing unit 18, an image or image data 17 may also be referred to as a raw image or raw image data 17.

The pre-processor 18 is configured to receive the (raw) image data 17 and to perform pre-processing on the image data 17 to obtain a pre-processed image 19 or pre-processed image data 19. Pre-processing performed by the pre-processor 18 may, for example, include trimming, color format conversion (for example, from RGB to YCbCr), color correction, or de-noising. It may be understood that the pre-processing unit 18 may be optional component.

The video encoder 20 is configured to receive the pre-processed image data 19 and provide encoded image data 21.

The communication interface 22 of the source device 12 may be configured to receive the encoded image data 21 and to transmit the encoded image data 21 (or any further processed version thereof) over a communication channel 13 to another device, for example, the destination device 14 or any other device, for storage or direct reconstruction.

The destination device 14 includes a decoder 30 (for example, a video decoder 30), and may additionally, that is, optionally, include a communication interface or communication unit 28, a post-processor 32 (or post-processing unit 32), and a display device 34.

The communication interface 28 of the destination device 14 is configured to receive the encoded image data 21 (or any further processed version thereof), for example, directly from the source device 12 or from any other source, for example, a storage device, for example, an encoded image data storage device, and provide the encoded image data 21 to the decoder 30.

The communication interface 22 and the communication interface 28 may be configured to send or receive the encoded image data 21 or encoded data through a direct communication link between the source device 12 and the destination device 14, for example, a direct wired or wireless connection, or through any kind of network, for example, a wired or wireless network or any combination thereof, or any kind of private and public network, or any kind of combination thereof.

The communication interface 22 may be, for example, configured to package the encoded image data 21 into an appropriate format, for example, packets, and/or process the encoded image data using any kind of transmission encoding or processing for transmission over a communication link or communication network.

The communication interface 28 corresponds to the communication interface 22, and may be, for example, configured to receive the transmitted data and process the transmitted data using any kind of corresponding transmission decoding or processing and/or decapsulation to obtain the encoded image data 21.

Both a communication interface 22 and a communication interface 28 may be configured as unidirectional communication interfaces as indicated by the arrow for the communication channel 13 in FIG. 1 pointing from the source device 12 to the destination device 14, or bi-directional communication interfaces, and may be configured, for example, to send and receive messages, for example, to set up a connection, to acknowledge and exchange any other information related to the communication link and/or data transmission, for example, encoded image data transmission.

The decoder 30 is configured to receive the encoded image data 21 and provide the decoded image data 31 or the decoded image 31.

The post-processor 32 of the destination device 14 is configured to post-process the decoded image data 31 (also referred to as reconstructed image data), such as the decoded image 31, to obtain post-processed image data 33, such as a post-processed image 33. Post-processing performed by the post-processing unit 32 may include, for example, color format conversion (for example, from YCbCr to RGB), color correction, trimming, or re-sampling, or any other processing, for example, for preparing the decoded image data 31 for display, for example, by the display device 34.

The display device 34 of the destination device 14 is configured to receive the post-processed image data 33 for displaying the image, for example, to a user or viewer. The display device 34 may be or include any type of display for representing the reconstructed image, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS), a digital light processor (digital light processor, DLP), or any type of other display.

Although FIG. 1 shows the source device 12 and the destination device 14 as separate devices, device embodiments may also include both the source device 12 and the destination device 14 or the functionality of both the source device 12 and the destination device 14. That is, both the source device 12 or a corresponding function and the destination device 14 or a corresponding function are included. In such embodiments the source device 12 or corresponding functionality and the destination device 14 or corresponding functionality may be implemented using the same hardware and/or software or by separate hardware and/or software or any combination thereof.

As will be apparent for a person skilled in the art based on the description, the existence and (exact) split of functionalities of the different units or functionalities within the source device 12 and/or destination device 14 as shown in FIG. 1A may vary depending on the actual device and application.

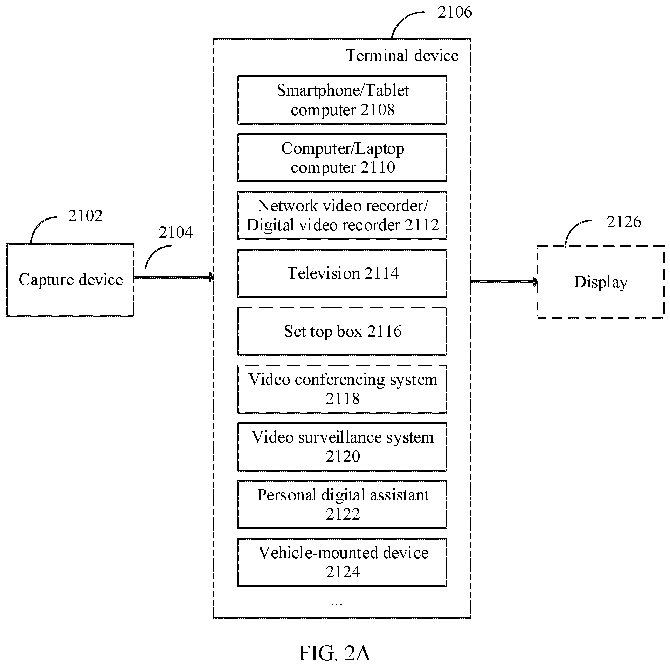

The following describes, with reference to FIG. 2A, a content providing system for a content delivery service applied in this application. FIG. 2A is a block diagram of a content providing system for implementing a content delivery service applied in an embodiment of this application. The content providing system 2100 includes a capture device 2102, a terminal device 2106, and (optionally) a display 2126. The capture device 2102 communicates with the terminal device 2106 through a communication link 2104. The communication link may include the communication channel 13 described above. The communication link 2104 includes but is not limited to Wi-Fi, Ethernet, wired, wireless (3G/4G/5G), USB, or any type combination thereof.

The capture device 2102 generates data, and may encode the data by using the encoding method shown in the foregoing embodiments. Alternatively, the capture device 2102 may distribute data to a streaming media server (not shown in the figure), and the server encodes the data and transmits the encoded data to the terminal device 2106. The capture device 2102 includes but is not limited to a camera, a smartphone or tablet computer, a computer or laptop, a video conference system, a PDA, a vehicle-mounted device, or any combination thereof. For example, the capture device 2102 may include the source device 12 described above. When the data includes a video, the video encoder 20 in the capture device 2102 may actually perform video encoding processing. When the data includes audio (that is, sound), the audio encoder 20 in the capture device 2102 may actually perform audio encoding processing. In some practical scenarios, the capture device 2102 distributes encoded video data and encoded audio data by multiplexing the encoded video data and the encoded audio data together. For other practical scenarios, for example in the video conference system, the encoded audio data and the encoded video data are not multiplexed. The capture device 2102 respectively distributes the encoded audio data and the encoded video data to the terminal device 2106.

The terminal device 2106 in the content providing system 2100 receives and then generates encoded data. The terminal device 2106 may be a device having a data receiving and recovery capability, for example, a smartphone or tablet computer 2108, a computer or laptop computer 2110, a network video recorder (network video recorder, NVR)/digital video recorder (digital video recorder, DVR) 2112, a television 2114, a set top box (set top box, STB) 2116, a video conferencing system 2118, a video surveillance system 2120, a personal digital assistant (personal digital assistant, PDA) 2122, a vehicle-mounted device 2124, any combination thereof, or a device capable of decoding the foregoing encoded data. For example, the terminal device 2106 may include the destination device 14 as described above. When the encoded data includes the video, the video decoder 30 in the terminal device preferentially performs video decoding. When the encoded data includes audio, an audio decoder in the terminal device preferentially performs audio decoding processing. The terminal device 2106 may be a video playing application, a streaming media playing application, a streaming media playing platform, a live streaming platform, or the like that runs on the terminal device.

For a terminal device with a display, such as the smartphone or tablet computer 2108, the computer or laptop computer 2110, an NVR/DVR 2112, the television 2114, the PDA 2122, or the vehicle-mounted device 2124, the terminal device may send decoded data to its display. For a terminal device without a display, for example, the STB 2116, the video conference system 3118, or the video surveillance system 2120, the device is connected to the external display 2126 to receive and display decoded data.

When each device in this system performs encoding or decoding, the image encoding device or the image decoding device, as shown in the foregoing embodiments, can be used.

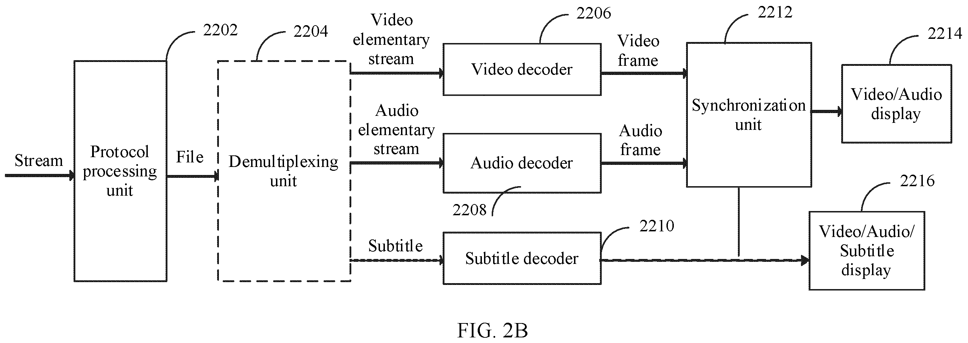

FIG. 2B is a diagram of an example structure of a terminal device 2106 in FIG. 2A. After the terminal device 2106 receives a bit stream from the capture device 2102, a protocol processing unit 2202 analyzes a transmission protocol of the bit stream. The protocol includes but is not limited to a real time streaming protocol (Real Time Streaming Protocol, RTSP), a hyper text transfer protocol (Hyper Text Transfer Protocol, HTTP), an HTTP live streaming protocol (HTTP Live streaming protocol, HLS), MPEG

dynamic adaptive streaming over HTTP (MPEG Dynamic Adaptive Streaming over HTTP, MPEG-DASH), a real-time transport protocol (Real-time Transport protocol, RTP), a real time message protocol (Real Time Messaging Protocol, RTMP), or any combination thereof.

After processing the stream, the protocol processing unit 2202 generates a stream file. The file is output to a demultiplexing unit 2204. The demultiplexing unit 2204 may separate multiplexed data into the encoded audio data and the encoded video data. As described above, for some practical scenarios, for example in the video conference system, the encoded audio data and the encoded video data are not multiplexed. In this case, the encoded data is transmitted to a video decoder 3206 and an audio decoder 2208 without using the demultiplexing unit 2204.

A video elementary stream (elementary stream, ES), an audio ES, and an optional subtitle are generated through demultiplexing processing. The video decoder 2206 includes the video decoder 30 described in the foregoing embodiments, decodes the video ES by using the decoding method shown in the foregoing embodiments to generate a video frame, and sends the data to a synchronization unit 2212. The audio decoder 2208 decodes the audio ES to generate an audio frame, and sends the data to the synchronization unit 2212. Alternatively, a video frame may be stored in a buffer (not shown in the figure) before being sent to the synchronization unit 2212. Similarly, the audio frame may be stored in the buffer (not shown in the figure) before being sent to the synchronization unit 2212.

The synchronization unit 2212 synchronizes the video frame and the audio frame, and provides a video/audio to a video/audio display 3214. For example, the synchronization unit 2212 synchronizes presentation of video information and audio information. The information may be encoded in syntax using time stamps concerning presentation of encoded audio and visual data and time stamps concerning delivery of a data stream itself.

If the bitstream includes a subtitle, a subtitle decoder 2210 decodes the subtitle, synchronizes it with the video frame and the audio frame, and provides the video/audio/subtitle to a video/audio/subtitle display 2216.

The present invention is not limited to the foregoing system, and the image encoding device or the image decoding device in the foregoing embodiments may be used in another system such as a vehicle.

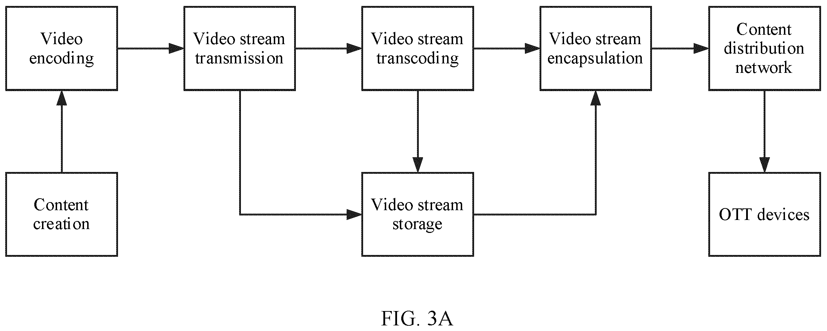

The following describes, with reference to FIG. 3A, a streaming media system to which an embodiment of this application is applicable. FIG. 3A is a diagram of a working procedure of a streaming media system applied in an embodiment of this application.

The streaming media system includes a content creation module that generates required content data, for example, video or audio. The streaming media system also includes a video encoding module that encodes the generated content by using an encoder. The streaming media system further includes a video stream transmission module, configured to transmit the encoded video in a form of a bitstream. Optionally, a format of the video stream may be converted into a bitstream format of a transmission protocol commonly used by an OTT (over-the-top) device. For example, the protocol includes but is not limited to a real time streaming protocol (Real Time Streaming Protocol, RTSP), a hyper text transfer protocol (Hyper Text Transfer Protocol, HTTP), an HTTP live streaming protocol (HTTP Live streaming protocol, HLS), MPEG HTTP dynamic adaptive streaming over HTTP (MPEG Dynamic Adaptive Streaming over HTTP, MPEG-DASH), a real-time transport protocol (Real-time Transport protocol, RTP), a real time message protocol (Real Time Messaging Protocol, RTMP), or any combination thereof. Optionally, for ease of use, video stream storage may be performed to store an original format of the video stream and/or a plurality of bitstream formats obtained through conversion. Further, the streaming media system further includes a video stream encapsulation module, configured to encapsulate a video stream to generate an encapsulated video stream. The encapsulated video stream may be referred to as a video stream media packet. For example, the video stream media packet may be generated based on a transcoded video stream or a stored video stream. Further, the streaming media system further includes a content distribution network (content distribution network, CDN). The CDN is configured to distribute the video stream media packet to a plurality of OTT devices, such as a mobile phone, a computer, a tablet, and a home projector.

It should be noted that video encoding, video stream transmission, video stream transcoding, video stream storage, video stream media packet generation, and the content distribution network may all be implemented on a cloud server.

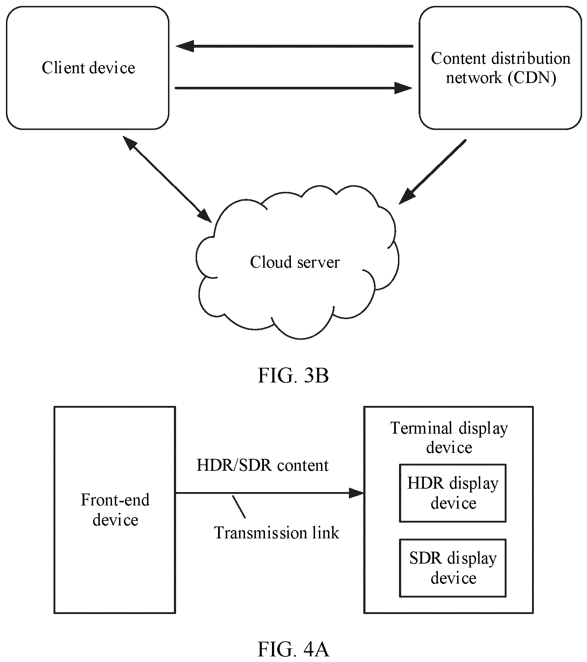

The following describes an example of a streaming media system architecture in this application with reference to FIG. 3B. The streaming media system architecture includes a client device, a content distribution network, and a cloud server.

A user on the client device sends a playing or playback request to a cloud platform. Optionally, content of the sent request may be a title of a played movie or television program.

The cloud server makes a decision, replies to the client, and sends an address of the content requested by the client on the CDN to the client. Optionally, the content sent to the client may be a URL link (uniform resource locator). Specifically, a playback application service in the cloud server checks user authorization and permission, and then considers each client feature and a current network condition to determine which specific file is required to process the playback request. It should be noted that the content distribution network (CDN) periodically reports a running status, a learned route, and available content (file) to a cache control service in the cloud server.

Then, the client requests the CDN to play the content based on the address. The CDN provides the content for the client and completes the request.

The following describes, with reference to FIG. 4A, a system architecture to which an embodiment of this application is applicable. FIG. 4A is a diagram of a possible system architecture applicable to an embodiment of this application. The system architecture in this embodiment of this application includes a front-end device, a transmission link, and a terminal display device.

The front-end device is configured to collect or produce HDR/SDR content (for example, an HDR/SDR video or image).

In a possible embodiment, the front-end device may be further configured to extract corresponding metadata from the HDR content, where the metadata may include global mapping information, local mapping information, and dynamic metadata and static metadata corresponding to the HDR content. The front-end device may send the HDR content and the metadata to the terminal display device through the transmission link. Specifically, the HDR content and the metadata may be transmitted in a form of one data packet, or separately transmitted in two data packets. This is not specifically limited in this embodiment of this application.

Optionally, the terminal display device may be configured to receive the metadata and the HDR content, extract, based on the HDR content, the global mapping information and the local mapping information that are included in corresponding metadata, and terminal display device information, obtain a mapping curve to perform global tone mapping and local tone mapping on the HDR content, convert the HDR content into display content adapted to an HDR display device or an SDR device in the terminal display device, and display the display content. It should be understood that, in different embodiments, the terminal display device may include a display device that has a display capability of having a lower dynamic range or a higher dynamic range than the HDR content generated by the front-end device. This is not limited in this application.

Optionally, the front-end device and the terminal display device in this application may be independent and different physical devices. For example, the front-end device may be a video collection device, or may be a video production device. The video collection device may be a device such as a video camera, a camera, or an image drawing machine. The terminal display device may be a device having a video playing function, such as a virtual reality (virtual reality, VR) eyeglass, a mobile phone, a tablet computer, a television, or a projector.

Optionally, the transmission link between the front-end device and the terminal display device may be a wireless connection or a wired connection. The wireless connection may use technologies such as long term evolution (long term evolution, LTE), 5th generation (5th generation, 5G) mobile communication, and future mobile communication. The wireless connection may further include technologies such as wireless fidelity (wireless-fidelity, Wi-Fi), Bluetooth, and near field communication (Near Field Communication, NFC). The wired connection may include an Ethernet connection, a local area network connection, and the like. This is not specifically limited.

In this application, a function of the front-end device and a function of the terminal display device may be further integrated into a same physical device, for example, a terminal device such as a mobile phone or a tablet computer that has a video shooting function. In this application, some functions of the front-end device and some functions of the terminal display device may be further integrated into a same physical device. This is not specifically limited.

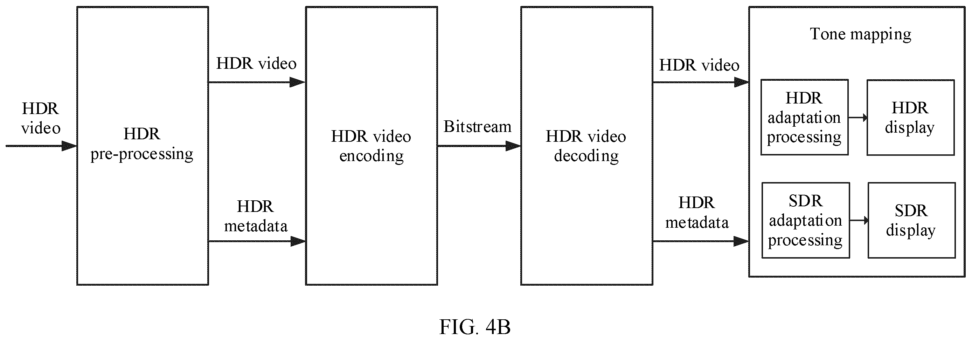

The following describes an end-to-end image processing system provided in an embodiment of this application with reference to FIG. 4B. The system may be applied to the system architecture shown in FIG. 4A. FIG. 4B is a diagram of a structure of an image processing system according to an embodiment of this application. In FIG. 4B, for example, HDR/SDR content is an HDR video. The image processing system includes an HDR pre-processing module, an HDR video encoding module, an HDR video decoding module, and a tone mapping module.

The HDR pre-processing module and the HDR video encoding module may be located in the front-end device shown in FIG. 4A, and the HDR video decoding module and the tone mapping module may be located in the terminal display device shown in FIG. 4A.

The HDR pre-processing module is configured to: extract dynamic metadata (for example, a maximum value, a minimum value, an average value, and a change range of luminance) from the HDR video; determine a mapping curve parameter based on the dynamic metadata and a display capability of a target display device; write the mapping curve parameter into the dynamic metadata to obtain HDR metadata; and transmit the HDR metadata. The HDR video may be captured, or may be an HDR video processed by a colorist. The display capability of the target display device is a luminance range that can be displayed by the target display device.

The HDR video encoding module is configured to perform video encoding on the HDR video and the HDR metadata according to a video compression standard (for example, an AVS or HEVC standard) (for example, embed the HDR metadata into a user-defined portion of a bitstream), to output a corresponding bitstream (an AVS or HEVC bitstream).

The HDR video decoding module is configured to decode the generated bitstream (the AVS bitstream or the HEVC bitstream) according to a standard corresponding to a bitstream format, and output the decoded HDR video and HDR metadata.

The tone mapping module is configured to: generate a mapping curve based on the mapping curve parameters in the decoded HDR metadata; perform tone mapping (namely, HDR adaptation processing or SDR adaptation processing) on the decoded HDR video; and display an HDR-adapted video obtained through tone mapping on an HDR display terminal for display, or send an SDR-adapted video on an SDR display terminal for display.

For example, the HDR pre-processing module may exist in a video capturing device or a video production device.

For example, the HDR video encoding module may exist in the video capturing device or the video production device.

For example, the HDR video decoding module may exist in a set top box, a television display device, a mobile terminal display device, and a video conversion device such as a live streaming or a network video application.

For example, the tone mapping module may exist in the set top box, the television display device, the mobile terminal display device, and the video conversion device such as the live streaming or the network video application. More specifically, the tone mapping module may exist in a form of a chip or a software program in a set top box, a television display, or a mobile terminal display, and may exist in a form of a software program in a video conversion device such as network live broadcast or a network video application.

In a possible embodiment, when both the tone mapping module and the HDR video decoding module exist in the set top box, the set top box may complete functions of receiving, decoding, and tone mapping of a video bitstream. The set top box sends, through a high-definition multimedia interface (high-definition multimedia interface, HDMI), video data obtained through decoding to a display device for display, so that a user can enjoy video content.

With reference to specific accompanying drawings, the following describes a process in which the terminal display device performs tone mapping.

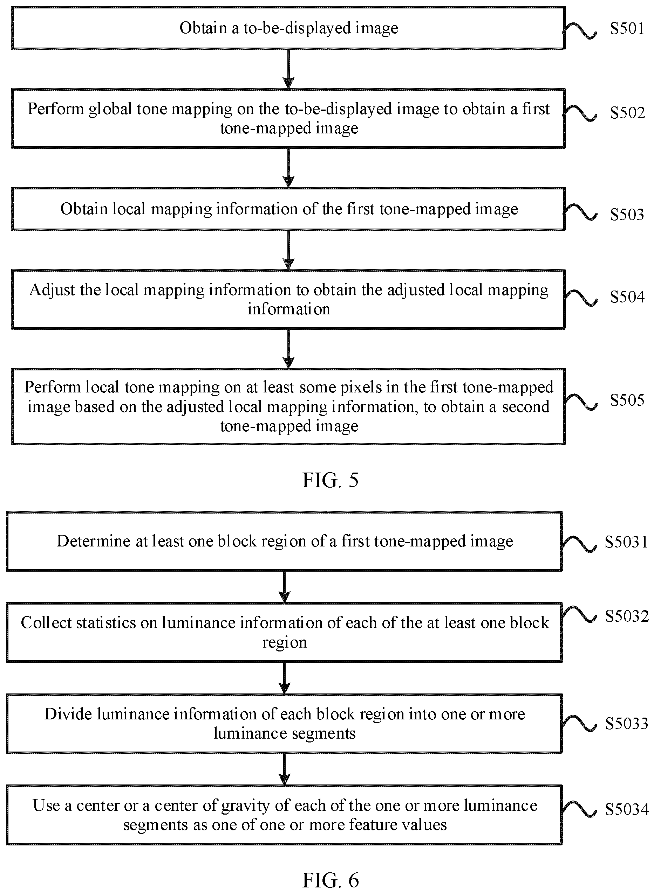

FIG. 5 is a schematic flowchart of a tone mapping method according to an embodiment of this application. The method may be performed by the terminal display device, and specifically includes the following steps:
S501: Obtain a to-be-displayed image.

In this embodiment of this application, the to-be-displayed image may be an HDR image or video, or may be an SDR image or video. The to-be-displayed image may be an optical signal or an electrical signal. This is not limited in this application. If the to-be-displayed image is the electrical signal, the electrical signal may be converted into the optical signal by using a photosignal transfer function.

In a possible embodiment, the to-be-displayed image is transmitted in a form of a bitstream. The terminal display device may receive the bitstream from a front-end device, and decode the bitstream to obtain data of the to-be-displayed image.

Optionally, the data of the to-be-displayed image includes image data, for example, pixel data. It should be understood that, in this embodiment of this application, a format of the image is not limited. The image data may be any color space, for example, RGB or YUV, and the image data is of any bit width, for example, 8 bits, 10 bits, or 12 bits.

Optionally, the data of the to-be-displayed image includes metadata. It should be understood that a format of the metadata is not limited in this embodiment of this application. The metadata includes data such as a data format of the image or the video, region division information, region traversal sequence information, an image feature, or a mapping curve parameter, and one or more metadata information units. The metadata information unit includes data such as coordinate information, the image feature, and the curve parameter. For example, the metadata may include global mapping information and local mapping information, where the local mapping information includes an initial local tone mapping curve and a feature value.

Optionally, a decoding device (for example, a set top box) receives a bitstream from a front-end device, decodes the bitstream to obtain the data of the to-be-displayed image, and then sends the decoded data of the to-be-displayed image to the terminal display device.

Optionally, a process of decoding the bitstream includes: decoding the received bitstream by using a decoder, to obtain the data of the to-be-displayed image. For example, the decoder may be an HEVC decoder, a JPEG decoder, a ProRes decoder, or a VVC decoder.

In another possible embodiment, the to-be-displayed image is an image that can be processed by software. Software processing includes but is not limited to tone mapping, dehazing (dehaze), deblurring (deblur), scaling, color gamut transformation, and neural network-based graphics processing.

In another possible embodiment, the to-be-displayed image may be an image processed by hardware. Hardware processing includes but is not limited to tone mapping, dehazing (dehaze), deblurring (deblur), scaling, color gamut transformation, and neural network-based graphics processing.

Optionally, a tone mapping process further includes: obtaining terminal display device information, where the terminal display device information is used to adjust a mapping curve. The terminal display device information includes display capability information of a display, for example, peak luminance and darkest luminance. It should be understood that a manner of obtaining the terminal display device information is not limited in the present invention. The terminal display device information may be information obtained from a terminal display device interface, or may be information obtained from a preset lookup table based on a terminal display device model, or may be preset terminal display device information.

S502: Perform global tone mapping on the to-be-displayed image to obtain a first tone-mapped image.

In this embodiment of this application, a global tone mapping curve is first obtained, and then global tone mapping is performed on the to-be-displayed image by using the global tone mapping curve, to obtain the first tone-mapped image. A method and a curve used in a process of obtaining the global tone mapping curve are not limited in the present invention.

In a possible embodiment, global tone mapping curve information may be obtained based on parameter information of an initial global tone mapping curve and the display capability information of the display in the terminal device information.

Optionally, after the terminal device information is obtained, one or more pieces of appropriate preset display device information and one or more corresponding initial global tone mapping curve parameters are selected based on the terminal device information. Then, the global tone mapping curve is obtained based on the one or more initial global tone mapping curve parameters, to adapt to the display device information of the terminal device.

Optionally, some parameter values of the global tone mapping curve may be preset values, and do not need to be calculated.

Optionally, the metadata may include a plurality of pieces of preset display device information, for example, peak luminance, and an initial global tone mapping curve parameter for performing tone mapping on the peak luminance. A format of the metadata is not limited in this application. The metadata may include histogram information and tone mapping curve parameter information that are specified in, for example, the standard ST2094-40, or may include the tone mapping curve parameter information specified in, for example, the standard ST2094-10.

Optionally, the plurality of pieces of preset display device information, for example, the peak luminance, and the initial global tone mapping curve parameter for performing tone mapping on the peak luminance may be preset values that are preset locally.

Optionally, when an initial global tone mapping curve parameter is obtained, parameter adjustment may be performed on the initial global tone mapping curve parameter to adapt to the terminal display device information.

Optionally, when a plurality of initial global tone mapping curve parameters are obtained, the global tone mapping curve may be obtained in a weighted averaging manner based on a relationship between the plurality of pieces of preset display device information corresponding to the plurality of initial global tone mapping curves and the terminal display device information.

Optionally, the tone mapping curve may be calculated based on partial information of the initial global tone mapping curve and the terminal display device information. The partial information of the initial global tone mapping curve may be carried in the metadata, or may be a preset value that is preset locally.

In another possible embodiment, the global tone mapping curve information may be obtained based on information about the initial global tone mapping curve, feature information of the image, and terminal device information. The feature information of the image includes content feature information, for example, maximum content luminance, minimum content luminance, and average content luminance, and feature information related to preset percentage distribution of the image. The information about the initial global tone mapping curve may be carried in the metadata, or may be a preset value that is preset locally. The feature information of the image may be carried in the metadata. Optionally, some values of the global tone mapping curve may be preset values, and do not need to be calculated.

In another possible embodiment, the global tone mapping curve may be calculated based on the content feature information that is of the to-be-displayed image and that is in the metadata. Optionally, some values of the global tone mapping curve may be preset values, and do not need to be calculated.

It should be noted that the tone mapping curve includes various forms, for example, a Sigmoid function curve, a cubic spline function curve, and a Gamma function. This is not limited in the present invention.

For example, the global tone mapping curve may be obtained by using the following function:

$$L' = F(L) = a \times \left( \frac{p \times L^n}{(p-1) \times L^n + 1} \right)^m + b.$$

L may be R, G, or B in an RGB color gamut, or luminance Y in a YUV color gamut, or a luminance component L in a Lab color gamut. According to the foregoing curve, a mapping relationship of mapping from normalized HDR/SDR source data to normalized HDR display data may be obtained. L and L' may be normalized optical signals or electrical signals. This is not limited in the present invention.

For example, it may be preset that m = 2.4, n = 1, and b = darkest luminance of the terminal display device.

A process of obtaining p based on the feature information of the image and the preset relationship is as follows: First, feature information of the image is obtained from the metadata, including a maximum value maxL, a minimum value minL, an average value avgL, and the like. Then, p is obtained based on the feature information of the image and the preset relationship.

Optionally, p may be obtained based on avgL and a preset relationship:

$$p = \begin{cases} p_{valueH0} & avgL > TPH0 \\ p_{valueH0} \times g0(w0) + p_{valueL0} \times (1 - g0(w0)) & TPL0 \leq avgL \leq TPH0 \\ p_{valueL0} & avgL < TPL0 \end{cases}$$

$P_{valueH0}$, $P_{valueL0}$, TPH0, and TPL0 are all preset parameters, and $P_{valueH0} = 3.5$, $P_{valueL0} = 4.0$, TPH0 = 0.6, and TPL0 = 0.3 may be set.

Optionally, p may be obtained based on maxL and a preset relationship:

$$p = \begin{cases} p_{deltaH1} & maxL > TPH1 \\ p_{deltaH1} \times g1(w1) + p_{deltaL1} \times (1 - g1(w1)) & TPL1 \leq maxL \leq TPH1 \\ p_{deltaL1} & maxL < TPL1 \end{cases}$$

$P_{deltaH1}$, $P_{deltaL1}$, TPH1, and TPL1 are all preset parameters, and $P_{deltaH1}$ = 3.5, $P_{deltaL1}$ = 4.0, TPH1 = 0.6, and TPL1 = 0.3 may be set.

Optionally, p may be further adjusted based on maxL and a preset relationship:

$$p = \begin{cases} m\_p + p_{deltaH1} & maxL > TPH1 \\ p + p_{deltaH1} \times g1(w1) + p_{deltaL1} \times (1 - g1(w1)) & TPL1 \leq maxL \leq TPH1 \\ m\_p + p_{deltaL1} & maxL < TPL1 \end{cases}$$

a may be calculated based on the terminal display device information, the feature information that is of the image and that is obtained from the metadata, and another curve parameter:

$$a = (MaxDisplay - MinDisplay) \div \left( \frac{p \times maxL}{(p - 1) \times maxL + 1} \right)^{m}.$$

Peak luminance of the terminal display device is MaxDisplay, darkest luminance is MinDisplay, and a maximum value of the feature information that is of the image and that is obtained from the metadata is maxL.

After the global tone mapping curve is obtained, global tone mapping is performed on each pixel of the to-be-displayed image by using the global tone mapping curve, to obtain the first tone-mapped image. A method and a curve used in this process are not limited in this application.

For example, an implementation process of global tone mapping is as follows:

First, a tone mapping coefficient table lut is obtained based on the global tone mapping curve, where the coefficient table lut is used to obtain a tone mapping coefficient Ratio.

Then, a luminance value lum of each pixel (R, G, B) is obtained, and a tone mapping coefficient Ratio corresponding to the luminance value lum is obtained from the coefficient table lut, where Ratio = lut[Lum]. A calculation method for obtaining the luminance value lum of each pixel (R, G, B) is not limited in this application. For example, Lum = max (R, G, B) or Lum = a * R + b * G + c * B, where a, b, and c are weighting coefficients.

Finally, each pixel (R, G, B) is multiplied by the tone mapping coefficient to perform tone mapping, and a tone-mapped pixel is (RTM, GTM, BTM):

$$RTM = R * Ratio, \ GTM = G * Ratio, \ and \ BTM = B * Ratio.$$

Alternatively, tone mapping is performed by using the YUV color gamut: [Y U V] = M[R G B], and [R G B] = M⁻¹ * [Y U V], where M is selected based on the standard BT.2020 or the standard BT709. A mapping value of a tone-mapped luminance component in YUV is YTM = Y * ratio.

S503: Obtain local mapping information of the first tone-mapped image.

In this embodiment of this application, the local mapping information includes at least one initial local tone mapping curve and at least one feature value. Local tone mapping may be performed on some or all pixels of the first tone-mapped image in a plurality of manners such as block-based local tone mapping, layer-based local tone mapping, or layer and block-combined local tone mapping. Therefore, local mapping information corresponding to a used local tone mapping manner needs to be obtained. The local mapping information includes the at least one initial local tone mapping curve and the at least one feature value. It should be noted that each of the at least one initial local tone mapping curve corresponds to one or more feature values.

Optionally, the at least one initial local tone mapping curve and the at least one feature value may be obtained from the metadata of the to-be-displayed image.

Optionally, obtaining the local mapping information of the first tone-mapped image includes: obtaining local mapping indication information; and when the local mapping indication information indicates that local mapping is to be applied, determining preset local mapping information or calculating the local mapping information. Optionally, the local mapping information may be calculated based on data of the to-be-displayed image.

In this embodiment, whether to apply local mapping may be selected based on the local mapping indication information. This further meets diversified user mapping requirements, and effectively improves user experience.

In a possible embodiment, when block-based local tone mapping is used as the local tone mapping manner, a feature value in the local mapping information of the first tone-mapped image may be obtained through calculation. For a method, refer to FIG. 6. FIG. 6 is a schematic flowchart of a feature value obtaining method according to an embodiment of this application.

S5031: Determine at least one block region of the first tone-mapped image.

Optionally, the at least one block region of the first tone-mapped image may be at least one block region obtained through division based on the to-be-displayed image, or may be at least one block region obtained through division based on the first tone-mapped image.

Optionally, the first tone-mapped image may be divided based on division information in the metadata of the to-be-displayed image, and a block region on which local tone mapping needs to be performed is selected as the at least one block region of the first tone-mapped image.

Optionally, the first tone-mapped image may be divided based on a preset rule, and a block region on which local tone mapping needs to be performed is selected as the at least one block region of the first tone-mapped image. Optionally, segmentation may be performed by using an image clustering algorithm, for example, a pixel segmentation method such as Graph-based, NCut, Turbopixel, Quick-shift, Graph-cut a, Graph-cut b, and SLIC (simple linear iterative clustering), to divide the first tone-mapped image. In addition, a block region on which local tone mapping needs to be performed is selected and determined as the at least one block region of the first tone-mapped image. It should be noted that, when the first tone-mapped image is divided into the plurality of regions, the regions may be a plurality of rectangular segmentation regions, or may have irregular boundaries.

It should be noted that a feature region of the to-be-displayed image, for example, a face, a green plant, a red flag, a region with high complexity, a region with obvious noise, and a non-flat region, may be selected as the block region on which local tone mapping needs to be performed, to improve tone mapping efficiency. A region selection method is not limited in this application. Optionally, selection information of a selected region may be obtained from the metadata, or may be obtained based on a preset rule, or may be directly obtained based on the to-be-displayed image feature.

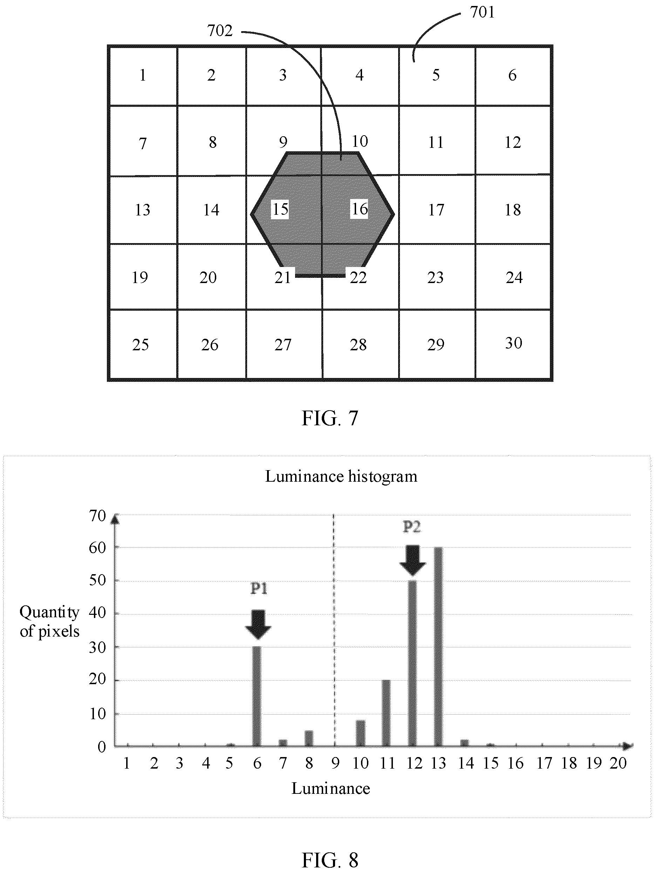

For example, FIG. 7 is a diagram of a method for determining a block region according to an embodiment of this application. FIG. 7 shows a method for determining at least one block region of the first tone-mapped image. An image 701 includes a regular hexagon 702. The image 701 may be considered as the to-be-displayed image, or may alternatively be considered as the first toneimage. In an average division manner, the image 701 may be divided into 30 rectangular regions numbered 1 to 30. The 30 rectangular regions may be determined as the at least one block region of the first tone-mapped image, and are used to perform local tone mapping in a subsequent step. Alternatively, rectangular regions occupied by the regular hexagon 702 (rectangular regions numbered 9, 10, 15, 16, 21, and 22) in the image 701 may be selected as feature regions, are determined as the at least one block region of the first tone-mapped image, and are used to perform local tone mapping in the subsequent step.

S5032: Collect statistics on luminance information of each of the at least one block region.

Optionally, a quantity of pixels with different luminance in each block region may be counted, to obtain a luminance histogram. For example, FIG. 8 is a luminance histogram of a block region according to an embodiment of this application.

S5033: Divide the luminance information of each block region into one or more luminance segments.

Optionally, the luminance information of each block region may be divided into the one or more luminance segments based on the luminance histogram. A quantity of luminance segments and a range of each luminance segment are not limited in the present invention, and may be set as required, may be obtained from the metadata, or may be further obtained from a preset rule. It should be noted that a division method for dividing the luminance information of each block region into the one or more luminance segments is not limited in the present invention, and may be uniform division or non-uniform division.

For example, refer to FIG. 8. The block region may be divided into two luminance segments based on the luminance histogram of the block region. A first luminance segment ranges from 0 to 9, and may be referred to as a dark region. A second luminance segment ranges from 10 to 20, and may be referred to as a bright region.

S5034: Use a center or a center of gravity of each of the one or more luminance segments as one of the one or more feature values.

Optionally, a feature value of each block region may be obtained by using an image clustering segmentation algorithm. Each block region is divided into one or more cluster regions. A cluster center of each cluster region is used as a feature value, to obtain one or more feature values of each block region. The image clustering segmentation algorithm is not limited in this application. For example, the image clustering segmentation algorithm is a pixel segmentation method such as Graph-based, NCut, Turbopixel, Quick-shift, Graph-cut a, Graph-cut b, or SLIC.

For example, refer to FIG. 8. For the dark region of the block region, a center 6 of gravity of the dark region may be selected as a feature value. For the bright region of the block region, a center 12 of gravity of the bright region may be selected as a feature value. In this case, the block region corresponds to two feature values 6 and 12.

In this embodiment, each block region has the one or more luminance segments, and the center or the center of gravity of each luminance segment is the feature value. Therefore, each feature value has a typical feature of the luminance segment, and is representative. The local mapping curve is adjusted based on the feature value, so that the adjusted local tone mapping curve can be smoother, and is more closely related to the global tone mapping curve. This improves tone mapping effect and display effect of the image obtained through local mapping.

In this embodiment, when there are a plurality of luminance segments in the block region, that is, there are a plurality of feature values, different feature values reflect features of different luminance segments, and the local mapping curve adjusted based on the plurality of feature values is also on different luminance segments and is affected by the global tone mapping curve. Therefore, consistency of the plurality of luminance segments in the block region can be achieved, and a complex image region can be better processed.

For example, when the block region is divided into two luminance segments: a bright region and a dark region, when the local mapping curve is adjusted based on a feature value of the bright region and a feature value of the dark region, the feature value of the bright region mainly enables a bright region of the local mapping curve to be affected by global tone mapping, and the feature value of the dark region mainly enables a dark region of the local mapping curve to be affected by global tone mapping. Therefore, luminance consistency and coordination between the bright region and the dark region after local mapping of the block region are achieved, and image display can better adapt to a display device. This improves display effect of complex images or complex areas in images, to meet diversified user requirements.

In a possible embodiment, when block-based local tone mapping is used as the local tone mapping manner, in the obtained local mapping information of the first tone-mapped image, the at least one initial local tone mapping curve may be obtained from the metadata, or may be obtained based on the preset rule. Initial local tone mapping curve information of each block region may be further obtained based on information of the block region.

It should be noted that the at least one initial local tone mapping curve is in a one-to-one correspondence with the at least one block region of the first tone-mapped image.

A type of the initial local tone mapping curve is not limited in this application. For example, the tone mapping curve may be a piecewise linear curve:

$$L_{m,x}[n] = g_m[n](L) = L_{m-1} + a[n][m] * (x - (m-1) * step).$$

m is a current interval index, $L_{m-1}$ is a Y coordinate value of a start location of an $m^{th}$ interval, step is a segment interval, x is an input luminance value, and n is an index of a current tone mapping curve in a plurality of tone mapping curves, or is a segmental or non-segmental curve in another form, for example, L = g[n] (L).

S504: Adjust the local mapping information to obtain the adjusted local mapping information.

In this embodiment of this application, adjusting the local mapping information to obtain the adjusted local mapping information includes: adjusting the at least one initial local tone mapping curve based on the at least one feature value, to obtain the at least one adjusted local tone mapping curve, so that the at least one adjusted local tone mapping curve and a global tone mapping curve used for global tone mapping meet a first condition.

The first condition includes: A mapping value obtained through mapping a first feature value by using the global tone mapping curve is a second feature value, or a value obtained through performing function transformation on a mapping value obtained through mapping a first feature value by using the global tone mapping curve is a second feature value, where the first feature value is any one of the one or more feature values;
a mapping value obtained through mapping the second feature value by using the adjusted local tone mapping curve corresponding to the first feature value is a third feature value; and a difference between the second feature value and the third feature value falls within a first range.

Optionally, function transformation in "a value obtained through performing function transformation on a mapping value obtained through mapping a first feature value by using the global tone mapping curve is a second feature value" may be obtained through calculation by using a gamma function, a linear function, a power function, an exponential function, or the like. The mapping value is changed by using function transformation, to improve tone mapping effect. For example, the mapping value is increased, to improve image luminance and provide a more comfortable user experience.

Optionally, a range of the difference may be transferred in a preset manner or a metadata manner.

In this embodiment, in a process of adjusting, based on the feature value, the initial local tone mapping curve to meet the first condition, local tone mapping performed later is organically associated global tone mapping performed earlier. Luminance and darkness consistency of global tone mapping is used to properly balance a problem of an uncoordinated contrast between different regions in local tone mapping, and alleviate a halo problem caused by the uncoordinated contrast. This can effectively improve tone mapping effect of the image, and further effectively improve display effect of the image.

In this embodiment, due to limitation effect of the difference, the adjusted local tone mapping curve is associated with the global tone mapping curve compared with the initial local tone mapping curve, so that adjusted local tone mapping curves of different block regions maintain luminance and darkness consistency to some extent on the entire image. In this way, consistency is maintained to some extent on the entire image on which local mapping is performed, and the entire image is more coordinated and unified while local mapping details are retained. This effectively improves tone mapping effect and display effect of the image.

In this embodiment, local tone mapping is performed, based on the adjusted local tone mapping curve, on the block region corresponding to the adjusted local tone mapping curve. The adjusted local tone mapping curve integrates luminance and darkness consistency of global tone mapping while retaining a local detail. In this way, the block region obtained through local tone mapping is better fused with the entire image, the entire image is more coordinated, and operations such as deblocking filtering do not need to be performed. This improves display effect and reducing algorithm complexity.

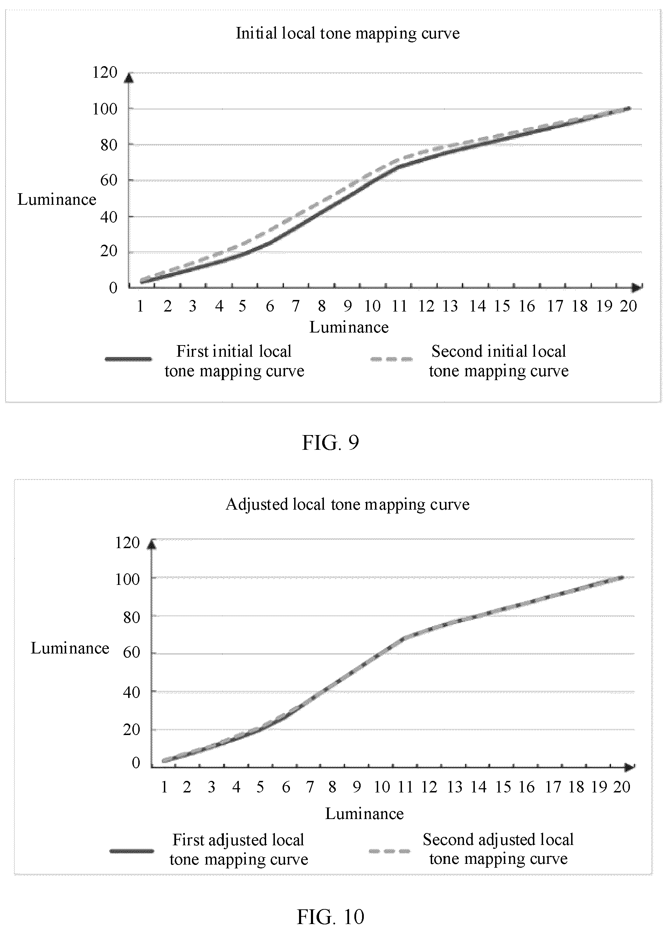

For example, a process of adjusting the initial local tone mapping curve to meet the first condition is described with reference to FIG. 9 and FIG. 10. FIG. 9 is an example diagram of an initial local tone mapping curve according to an embodiment of this application. FIG. 10 is an example diagram of an adjusted local tone mapping curve according to an embodiment of this application. As shown in FIG. 9, before adjustment, a gap between a first initial local tone mapping curve corresponding to a first block region and a second initial local tone mapping curve corresponding to a second block region is obvious. This indicates that a difference between the two curves is large. Tone mapping is separately performed on the two block regions based on the two initial local tone mapping curves. A problem of an uncoordinated overall contrast of an image is likely to occur.

As shown in FIG. 10, a parameter of the first initial local tone mapping curve is adjusted based on the two feature values of the first block region, to obtain a first adjusted local tone mapping curve. The curve has two mapping values at the two feature values. The two mapping values are equal to two mapping values of the global tone mapping curve at the foregoing two feature values. An adjustment process similar to the foregoing adjustment process is performed based on two feature values of the second block region, to obtain a second adjusted local tone mapping curve. It can be learned that a difference between the two adjusted local tone mapping curves is narrowed, but there is still a difference, and local information of some respective block regions is retained. Therefore, tone mapping is separately performed on the two block regions based on the two adjusted local tone mapping curves. This alleviates an overall uncoordinated image contrast problem and retains local details. This effectively improves tone mapping effect of the image and further effectively improves display effect of the image.

Optionally, the at least one initial local tone mapping curve may be adjusted based on the terminal display device information, to adapt to the terminal display device. Optionally, adjustment based on the terminal display device information may be performed before the initial local tone mapping curve is adjusted based on the feature value, or may be performed after the initial local tone mapping curve is adjusted based on the feature value.

For example, reference display luminance information targetLum generated through local tone mapping, peak luminance MaxDisplay of the terminal display device, and a maximum value MaxL of the block region of the to-be-displayed image may be obtained. An adjustment parameter $R_{curve}$ is calculated. A value range of $R_{curve}$ is from 0 to 1.

$$R_{curve} = ((MaxDisplay - targetLum)/(MaxL - targetLum))$$

A curve is adjusted based on the adjustment parameter $R_{curve}$. For the piecewise linear curve:

$$a'[n][m] = a[n][m] + R_{curve} * (1 - a[n][m]).$$

For another curve:

$$L'[n] = g'[n] (L) = g[n](L) + R_{curve} * (1 - g[n](L)).$$

S505: Perform local tone mapping on at least some pixels in the first tone-mapped image based on the adjusted local mapping information, to obtain a second tone-mapped image.

In this embodiment of this application, performing local tone mapping on the at least some pixels in the first tone-mapped image based on the adjusted local mapping information, to obtain the second tone-mapped image includes: performing local tone mapping on the at least some pixels in the first tone-mapped image based on the at least some of the at least one adjusted local tone mapping curve, to obtain the second tone-mapped image. At least one feature value-adjusted local tone mapping curve is in a one-to-one correspondence with the at least one block region of the first tone-mapped image. Optionally, the at least some pixels in the first tone-mapped image on which the local tone mapping is performed may be pixels in the at least one block region of the first tone-mapped image in step 5303. Optionally, the at least some pixels may alternatively be selected from a feature region of the to-be-displayed image, for example, a face, a green plant, a red flag, a region with high complexity, a region with obvious noise, and a pixel in a non-flat region. A method for selecting the to-be-processed pixel is not limited in this application. Optionally, the selected pixel may be obtained from the metadata, may be obtained based on a preset rule, or may be directly obtained based on the image feature.

In a possible embodiment, performing local tone mapping on the at least some pixels in the first tone-mapped image based on the at least some of the at least one adjusted local tone mapping curve, to obtain the second tone-mapped image includes: separately performing, based on the at least one adjusted local tone mapping curve, local tone mapping on block regions respectively corresponding to the at least one adjusted local tone mapping curve, to obtain the second tone-mapped image.

In this embodiment, local tone mapping is performed on the to-be-processed pixel based on the at least one adjusted local tone mapping curve, to reduce a problem of an uncoordinated contrast between different block regions caused by performing local tone mapping by using different local tone mapping curves for different block regions. This further improves image tone mapping effect.

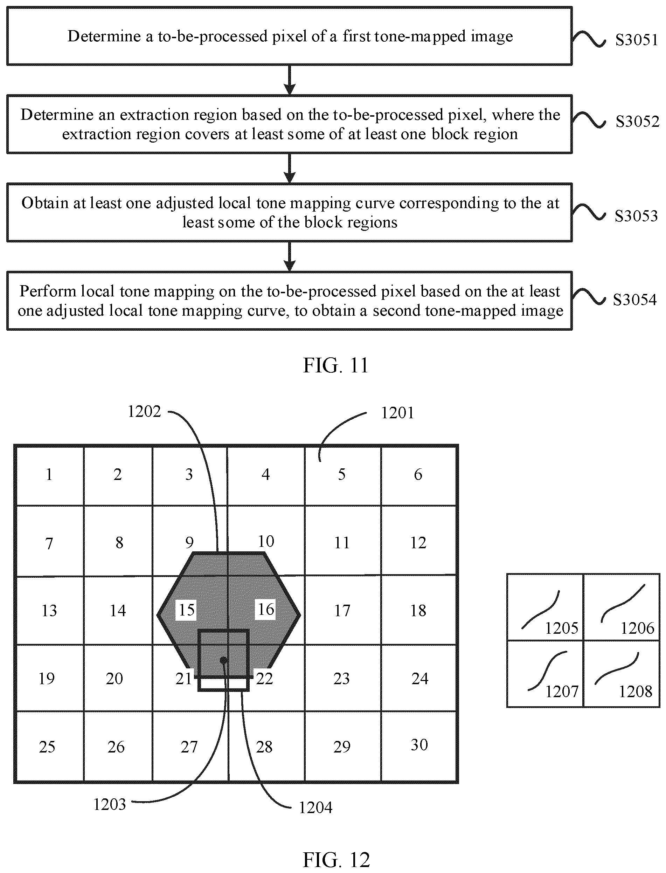

In another possible embodiment, for a process of performing local tone mapping on the at least some pixels in the first tone-mapped image based on the at least some of the one or more adjusted local tone mapping curves, to obtain the second tone-mapped image, refer to FIG. 11. FIG. 11 is a schematic flowchart of a block-based local tone mapping method according to an embodiment of this application. A specific process is as follows.

S3051: Determine a to-be-processed pixel of the first tone-mapped image.

In this embodiment of this application, the to-be-processed pixel is any pixel of the at least some pixels in the first tone-mapped image on which local tone mapping is performed.

For example, FIG. 12 is an example diagram of a block-based local tone mapping method according to an embodiment of this application. It may be considered that a regular hexagon 1202 in a picture 1201 is the at least some pixels in the tone-mapped image. A pixel 1203 is a pixel in the regular hexagon 1202, and may be considered as the to-be-processed pixel.

S3052: Determine an extraction region based on the to-be-processed pixel, where the extraction region covers at least some of the at least one block region.

Optionally, the extraction region is a region centered on the to-be-processed pixel. A shape and a size of the extraction region are not limited in this application. For example, the extraction region may be a region of different shapes such as a rectangle or a circle. Optionally, the extraction region may be of a preset size or a size specified by the metadata. Optionally, information about the extraction region may be obtained from the metadata, or may be locally preset information.

In this embodiment, the local tone mapping curve including the block region in which the to-be-processed pixel is located and another adjacent or similar block region is selected by using the extraction region. Local tone mapping is performed on the to-be-processed pixel based on a plurality of local tone mapping curves corresponding to a plurality of block regions. This reduces a problem that a contrast between different block regions is uncoordinated when different local tone mapping curves are used to perform local tone mapping in different block regions, and further improves image tone mapping effect.

For example, a rectangular region 1204 in FIG. 12 is an extraction region centered on the to-be-processed pixel, and an extraction region 804 covers block regions numbered 15, 16, 21, and 22. The four block regions are only a part of 30 block regions of the picture 1201.

S3053: Obtain the at least one adjusted local tone mapping curve corresponding to the at least some of the block regions.

In this embodiment of this application, the at least some block regions are block regions covered by the extraction region, and the adjusted local tone mapping curve corresponding to the block region is the curve obtained in step S504.

For example, the extraction region 804 in FIG. 12 covers the block regions numbered 15, 16, 21, and 22, and adjusted local tone curves respectively corresponding to the four block regions are curves 1205, 1206, 1207, and 1208.

S3054: Perform local tone mapping on the to-be-processed pixel based on the at least one adjusted local tone mapping curve, to obtain the second tone-mapped image. Optionally, performing local tone mapping on the to-be-processed pixel based on the at least one adjusted local tone mapping curve includes: performing local tone mapping on the to-be-processed pixel based on a plurality of adjusted local tone mapping curves to obtain a plurality of mapping values; and performing weighted averaging on the plurality of mapping values to obtain a mapping value of the to-be-processed pixel.

In this embodiment, when local tone mapping is performed on the to-be-processed pixel based on the plurality of adjusted local tone mapping curves, weighted averaging is performed on the obtained plurality of mapping values to obtain a final mapping value. Impact of the plurality of mapping values on the final mapping value is rationalized in a weighted averaging manner. This further reduces a problem of the uncoordinated contrast between the different block regions caused by local tone mapping performed by using the different local tone mapping curves for the different block regions, and effectively improves image tone mapping effect.

Optionally, a plurality of weighting coefficients Weight[n] may be obtained based on a quantity of pixels in each block region in the extraction region.

$$\text{Weight}[n] = \text{NUM}[n]/\sum\text{NUM}[n].$$

n is an index of the block region, and NUM[n] is a quantity of pixels in an $n^{th}$ block region.

For example, for a pixel (Rp, Gp, Bp), a plurality of mapping values are obtained based on adjusted local tone mapping curves g1 (L) and g2 (L) of the two block regions, and weighting is performed based on the plurality of weighting coefficients Weight[n], to obtain a final mapping values (Rtm, Gtm, and Btm).

$$Rtm = Weight[1] * g1((Rp) + Weight[2] * g2((Rp]).$$

$$Gtm = Weight[1] * g1((Gp) + Weight[2] * g2((Gp]).$$

$$Btm = Weight[1] * g1((Bp) + Weight[2] * g2((Bp]).$$

For example, in FIG. 12, tone mapping is performed on the to-be-processed pixel based on the four adjusted local tone curves 1205, 1206, 1207, and 1208. Specifically, mapping values obtained after the to-be-processed pixel is mapped by using the local tone curves 1205, 1206, 1207, and 1208 may be separately calculated, and then weighted averaging is performed on the four values to obtain a final mapping value of the to-be-processed pixel. The weight is a quantity of pixels in the block regions 15, 16, 21, and 22 that are respectively included in the extraction region centered on the to-be-processed pixel. In this example, the local mapping value of the to-be-processed pixel is obtained by using not only the adjusted tone mapping curve 1207 of the block region 21 in which the to-be-processed pixel is located, but also the adjusted tone mapping curves 1205, 1206, and 1208 of the adjacent block regions 15, 16, and 22. Therefore, the obtained final mapping value is not excessively different from a final mapping value of a pixel in another block region. This reduces a problem of an uncoordinated contrast between different block regions caused by local tone mapping performed by using different local tone mapping curves in different block regions.

Optionally, saturation adjustment may be performed on each pixel (R, G, B) in the second tone-mapped image obtained through the local tone mapping. It should be understood that the metadata may include attribute information (for example, color saturation adjustment intensity) of a color of at least one frame of image. Color information of the at least one frame of image obtained through mapping may be corrected based on the attribute information of the color and luminance information of each pixel in the to-be-displayed image before and after tone mapping.

For example, the pixel A in the to-be-displayed image is used as an example. A ratio of a first luminance value obtained after tone mapping is performed on the pixel A to a second luminance value obtained before tone mapping is performed on the pixel A is determined. A saturation adjustment factor is determined based on the ratio, a maximum display capability of a terminal display device, a maximum display capability of a reference display device (for example, a video production device) in a front-end device, the color attribute information of the at least one frame of image, and a second luminance value before tone mapping of the pixel A. Color information of the pixel A is adjusted based on the saturation adjustment factor. The maximum display capability may be understood as a maximum display luminance value.

It should be understood that the color information may be a YUV signal or a color signal in another form. This is not specifically limited in this embodiment of this application. Y in "YUV" is used to represent luminance information of an image, and UV is used to represent color information of the image.

In a possible embodiment, the color information is a YUV signal, and color information correction can be implemented by multiplying the saturation adjustment factor by a UV component of each pixel in the at least one frame of image obtained through tone mapping.

For example, a saturation adjustment process may be as follows.

Color adjustment ratioc is obtained based on Lum and ratio, and may be ratioc = (ratio) N or the like.

[Y U V] = M * [R G B], UTM = U * ratioc, VTM = V * ratioc. M is selected based on the standard BT.2020 or BT709.

It should be noted that a saturation adjustment algorithm, also referred to as a color adjustment algorithm, is not limited in the present invention, and may be performed in different color gamuts, for example, RGB, IctCp, HSV, and Lab.

Optionally, color gamut mapping may be added after local tone mapping or saturation adjustment, and a current color gamut is converted to a target color gamut. The current color gamut and the target color gamut include but are not limited to BT.2020, BT.709, DCI-P3, and sRGB.

In this embodiment of this application, the color information of the to-be-displayed image is adjusted based on the luminance information of each pixel in the to-be-displayed image before and after tone mapping, the display capability of the terminal display device, the maximum display capability of the reference display device in the front-end device, and the attribute information of the color of the to-be-displayed image. This can obtain good correction effect, and further obtain good display effect.

Optionally, local tone mapping includes layer-based local tone mapping, block-based local tone mapping, or a combination of layer-based local tone mapping and block-based local tone mapping. Specifically, local tone mapping includes layer-based local tone mapping in which an image is divided into a plurality of layers for mapping, or block-based local tone mapping in which an image is divided into a plurality of blocks for mapping, or local tone mapping in which layer-based local tone mapping and block-based local tone mapping are combined. A combination manner of layer-based local tone mapping and block-based local tone mapping includes: first performing block-based local tone mapping, and then performing layer-based local tone mapping; or first performing layer-based local tone mapping, and then performing block-based local tone mapping; or the image is first divided into a plurality of layers, and then block-based local tone mapping is performed on each layer.

In this embodiment, the user may select different local tone mapping manners based on requirements, to further meet diversified mapping requirements of the user. This effectively improves user experience.

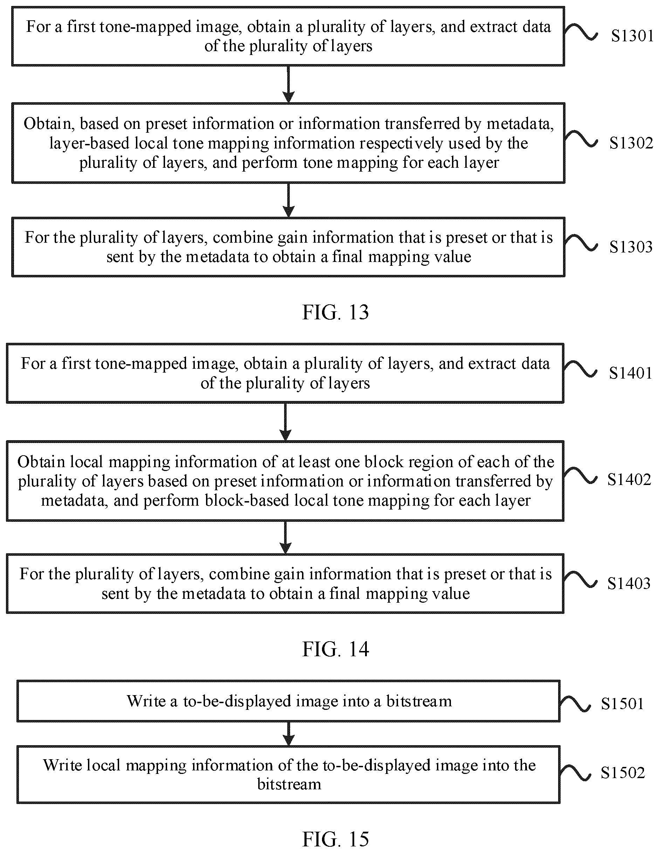

In a possible embodiment, local tone mapping in step S503 may be layer-based local tone mapping. To be specific, after global tone mapping is performed on the to-be-displayed image, layer-based local tone mapping may be performed. For a layer-based local tone mapping process, refer to FIG. 13. FIG. 13 is a schematic flowchart of a layer-based local tone mapping method according to an embodiment of this application. A process of layer-based local tone mapping is as follows.

S1301: For the first tone-mapped image, obtain a plurality of layers, and extract data of the plurality of layers.

Optionally, the plurality of layers may be a plurality of layers obtained through filtering by using a filter. The filter may be a spatial-domain filter, a time-domain filter, or a spatial time combined filter. The plurality of layers may be a plurality of layers obtained by combining image segmentation and filtering.

For example,

Any luminance value L1[m] in a first layer may be:

$$L1[m] = \sum_{n=1}^{filterL}(\text{filter}[n] * L[m - filterL/2])/\left(\sum_{m=1}^{filterL}\text{filter}[n]\right).$$

L is a luminance value of an original image, filter[n] is a filtering coefficient at any position of the filter, and filterL is a length of the filter.

Any luminance value L2[m] in a second layer L2 may be:

$$L2[m] = L[m] - L1[m]8.$$

L may be R, G, or B in an RGB color gamut, or luminance Y in a YUV color gamut, or a luminance component L in a Lab color gamut.

S1302: Obtain, based on preset information or information transferred by metadata, layer-based local tone mapping information respectively used by the plurality of layers, and perform tone mapping for each layer.

For example, if an obtained first-layer tone mapping curve is g (), any mapping value L 1'[m] of the first layer L1 after mapping is:

$$L1'[m] = g(L1[m]).$$

If a tone mapping curve obtained for the second layer is f (), any mapping value L2'[m] of the second layer L2 after mapping is:

$$L2'[m] = f(L2[m]).$$

Mapping values corresponding to the first layer L1' in an RGB color gamut are RP[0], GP[0], and BP[0], and mapping values corresponding to the second layer L2' in the RGB color gamut are RP[1], GP[1], and BP[1]. The mapping values of the plurality of layers in the RGB color gamut are collectively referred to as RP[n], GP[n], and BP[n].

S1303: Finally, for the plurality of layers, combine gain information that is preset or that is sent by the metadata to obtain a final mapping value.

$$Rtm = \sum(RP[n] * gain[n]).$$

$$Gtm = \sum(GP[n] * gain[n]).$$

$$Btm = \sum(BP[n] * gain[n]).$$

RP[n], GP[n], and BP[n] are any pixel value of an $n^{th}$ layer, gain[n] is gain information of the $n^{th}$ layer, and Rtm, Gtm, and Btm are mapping values of a final image.

In another possible embodiment, local tone mapping in step S503 may use a mapping method in a combination of layer-based local tone mapping and block-based local tone mapping. To be specific, after global tone mapping is performed on the to-be-displayed image, the image may be first divided into the plurality of layers. Then, block-based local tone mapping is performed on each layer. For example, FIG. 14 is a schematic flowchart of a layer and block-combined local tone mapping method according to an embodiment of this application. A local tone mapping process is as follows.

S1401: For the first tone-mapped image, obtain the plurality of layers, and extract data of the plurality of layers.

This process is the same as step S1301 in which a layer-based local tone mapping process is used for local tone mapping in step S503 in the foregoing embodiment. Details are not described herein again.

S1402: Obtain local mapping information of at least one block region of each of the plurality of layers based on preset information or information transferred by the metadata, and perform block-based local tone mapping for each layer to obtain RP[n], GP[n], and BP[n].

A process of performing block-based local tone mapping on each layer is the same as steps S303, S304, and S305 in the foregoing embodiment. Details are not described herein again. It should be understood that each layer is equivalent to the first tone-mapped image in steps S303, S304, and S305.

S1403: For a plurality of layered pixels RP[n], GP[n], and BP[n], combine gain information gain[n] that is preset or sent by the metadata to obtain the final mapping values Rtm, Gtm, and Btm.

$$Rtm = \sum(RP[n] * gain[n]).$$

$$Gtm = \sum(GP[n] * gain[n]).$$

$$Btm = \sum(BP[n] * gain[n]).$$

RP[n], GP[n], and BP[n] are any pixel value of an $n^{th}$ layer, gain[n] is gain information of the $n^{th}$ layer, and Rtm, Gtm, and Btm are mapping values of a final image.

This process is the same as step S1303 in which a layer-based local tone mapping process is used for local tone mapping in step S503 in the foregoing embodiment. Details are not described herein again.

In this embodiment of this application, a joint tone mapping scheme is used. Global tone mapping is used first to ensure consistency of overall luminance perception. Then, based on global tone mapping, local tone mapping is used to further improve a local contrast. This can better implement tone mapping that adapts to different devices.

In this embodiment of this application, a tone mapping solution combining global tone mapping and local tone mapping is used. First, global tone mapping is performed to ensure consistency of overall luminance perception of an image, and then local tone mapping is performed to further improve a local contrast of the image. In addition, local tone mapping is performed based on the adjusted local mapping information. This adjustment helps balance a problem of an uncoordinated regional contrast caused by local tone mapping, and further improves local tone mapping effect. This effectively improves image display effect.

With reference to specific accompanying drawings, the following describes a process in which a front-end device performs image encoding.

FIG. 15 is a schematic flowchart of an image encoding method according to an embodiment of this application. The method may be performed by the front-end device, and specifically includes the following steps.

S1501: Write a to-be-displayed image into a bitstream.

It should be understood that the to-be-displayed image may be one or more frames of images. When the to-be-displayed image is a plurality of consecutive frames of images, the to-be-displayed image may be understood as a video. Optionally, the to-be-displayed image may be an HDR image or video, or may be an SDR image or video.

S1502: Write local mapping information of the to-be-displayed image into the bitstream.

Adjusted local mapping information is used to perform local tone mapping on at least some pixels in the to-be-displayed image on which global tone mapping is performed. The local mapping information includes at least one initial local tone mapping curve and at least one feature value. The at least one feature value is used to adjust the at least one initial local tone mapping curve to obtain the at least one adjusted local tone mapping curve, and the at least one adjusted local tone mapping curve and a global tone mapping curve used for global tone mapping meet a first condition. The at least one adjusted local tone mapping curve is used to perform local tone mapping on at least some pixels of the to-be-displayed image on which global tone mapping is performed. Each of the at least one initial local tone mapping curve corresponds to the one or more feature values. The at least one adjusted local tone mapping curve is in a one-to-one correspondence with at least one block region of the to-be-displayed image.

In a possible embodiment, the first condition includes:

A mapping value obtained through mapping a first feature value by using the global tone mapping curve is a second feature value, or a value obtained through performing function transformation on a mapping value obtained through mapping a first feature value by using the global tone mapping curve is a second feature value, where the first feature value is any one of the one or more feature values; a mapping value obtained through mapping the second feature value by using an adjusted local tone mapping curve corresponding to the first feature value is a third feature value; and a difference between the second feature value and the third feature value falls within a first range.

Optionally, function transformation in "a value obtained through performing function transformation on a mapping value obtained through mapping a first feature value by using the global tone mapping curve is a second feature value" may be obtained through calculation by using a gamma function, a linear function, a power function, an exponential function, or the like. The mapping value is changed by using function transformation, to improve tone mapping effect. For example, the mapping value is increased, to improve the image luminance and provide a more comfortable user experience.

In this embodiment, in a process of adjusting, based on the feature value, the initial local tone mapping curve to meet the first condition, local tone mapping performed later is organically associated global tone mapping performed earlier. Luminance and darkness consistency of global tone mapping is used to properly balance a problem of an uncoordinated contrast between different regions in local tone mapping, and alleviate a halo problem caused by the uncoordinated contrast. This can effectively improve tone mapping effect of the image, and further effectively improve display effect of the image.

In this embodiment, due to limitation effect of the difference, the adjusted local tone mapping curve is associated with the global tone mapping curve compared with the initial local tone mapping curve, so that adjusted local tone mapping curves of different block regions maintain luminance and darkness consistency to some extent on the entire image. In this way, consistency is maintained to some extent on the entire image on which local mapping is performed, and the entire image is more coordinated and unified while local mapping details are retained. This effectively improves tone mapping effect and display effect of the image.

In this embodiment of this application, local tone mapping may be performed on some or all pixels of the to-be-displayed image on which global tone mapping is performed in a plurality of manners such as block-based local tone mapping, layer-based local tone mapping, or layer and block-combined local tone mapping. Therefore, local mapping information corresponding to the used local tone mapping manner needs to be written into the bitstream.

In a possible embodiment, when block-based local tone mapping is used as the local tone mapping manner, a method for obtaining the feature value in the local mapping information of the to-be-displayed image through calculation is: determining at least one block region of the to-be-displayed image. Optionally, division information of the to-be-displayed image is written into the bitstream, where the division information is used to determine the at least one block region of the to-be-displayed image. The user may divide the to-be-displayed image based on a requirement, to obtain the division information, so as to further meet diversified mapping requirements of the user. This effectively improves user experience. Optionally, the to-be-displayed image may be divided based on a preset rule. Optionally, when the to-be-displayed image is divided into a plurality of block regions, the regions may be a plurality of rectangular segmentation regions, or may be irregular boundaries. For example, segmentation may be performed by using an image clustering algorithm, for example, a pixel segmentation method such as Graph-based, NCut, Turbopixel, Quick-shift, Graph-cut a, Graph-cut b, or SLIC, to divide the to-be-displayed image.

Optionally, the bitstream may include only division information of an area on which local tone mapping needs to be performed, and the division information is written into the bitstream. Optionally, selection information may be written into the bitstream, and the selection information is used to determine a selected region on which local tone mapping needs to be performed. For example, a feature region of the to-be-displayed image, for example, a face, a green plant, a red flag, a region with high complexity, a region with obvious noise, and a non-flat region, may be selected as a region on which local tone mapping needs to be performed. A region selection method is not limited in this application.

Luminance information of each of the at least one block region is collected.

Optionally, a quantity of pixels with different luminance in each block region may be counted, to obtain a luminance histogram.

The luminance information of each block region is divided into one or more luminance segments.

Optionally, the luminance information of each block region may be divided into the one or more luminance segments based on the luminance histogram. A quantity of luminance segments and a range of each luminance segment are not limited in the present invention, and may be set as required, may be obtained from the metadata, or may be further obtained from a preset rule. It should be noted that a division method for dividing the luminance information of each block region into the one or more luminance segments is not limited in the present invention, and may be uniform division or non-uniform division.

A center or a center of gravity of each of the one or more luminance segments is used as one of the one or more feature values.

In this embodiment, each block region has the one or more luminance segments, and the center or the center of gravity of each luminance segment is the feature value. Therefore, each feature value has a typical feature of the luminance segment, and is representative. The local mapping curve is adjusted based on the feature value, so that the adjusted local tone mapping curve can be smoother, and is more closely related to the global tone mapping curve. This improves tone mapping effect and display effect of the image obtained through local mapping.

In this embodiment, when there are a plurality of luminance segments in the block region, that is, there are a plurality of feature values, different feature values reflect features of different luminance segments, and the local mapping curve adjusted based on the plurality of feature values is also on different luminance segments and is affected by the global tone mapping curve. Therefore, consistency of the plurality of luminance segments in the block region can be achieved, and a complex image region can be better processed.

For example, when the block region is divided into two luminance segments: a bright region and a dark region, when the local mapping curve is adjusted based on a feature value of the bright region and a feature value of the dark region, the feature value of the bright region mainly enables a bright region of the local mapping curve to be affected by global tone mapping, and the feature value of the dark region mainly enables a dark region of the local mapping curve to be affected by global tone mapping. Therefore, luminance consistency and coordination between the bright region and the dark region after local mapping of the block region are achieved, and image display can better adapt to a display device. This improves display effect of complex images or complex areas in images, to meet diversified user requirements. When block-based local tone mapping is used as the local tone mapping manner, at least one initial local tone mapping curve in the local mapping information is written into the bitstream. The at least one initial local tone mapping curve is in a one-to-one correspondence with the at least one block region of the to-be-displayed image.

Optionally, local mapping indication information is written into the bitstream, where the local mapping indication information indicates whether local mapping is to be applied.

In this embodiment, the user may modify the local mapping indication information, and choose whether to apply local mapping, to further meet diversified mapping requirements of the user. This effectively improves user experience.

Optionally, writing the local mapping manner information into the bitstream, where the local mapping manner information indicates that a local tone mapping manner is used includes: layer-based local tone mapping in which an image is divided into a plurality of layers for mapping, or block-based local tone mapping in which an image is divided into a plurality of blocks for mapping, or local tone mapping in which layer-based local tone mapping and block-based local tone mapping are combined. A combination manner of layer-based local tone mapping and block-based local tone mapping includes: first performing block-based local tone mapping, and then performing layer-based local tone mapping; or first performing layer-based local tone mapping, and then performing block-based local tone mapping; or the image is first divided into a plurality of layers, and then block-based local tone mapping is performed on each layer.

In this embodiment, the user may select different local tone mapping manners based on requirements, to further meet diversified mapping requirements of the user. This effectively improves user experience.

Optionally, global mapping information is written into the bitstream, where the global mapping indication information is used to perform global tone mapping on the to-be-displayed image, and the global mapping information includes parameter information of an initial global tone mapping curve.

Optionally, a plurality of pieces of preset display device information, for example, peak luminance, and an initial global tone mapping curve parameter for performing tone mapping on the peak luminance are written into the bitstream. Optionally, when the metadata is written into the bitstream, a format of the metadata is not limited in this application. The metadata may include histogram information and tone mapping curve parameter information that are specified in, for example, the standard ST2094-40, or may include the tone mapping curve parameter information specified in, for example, the standard ST2094-10.

Optionally, the foregoing information may be written into the metadata. It should be understood that the format of the metadata is not limited in this embodiment of this application. The metadata may include data such as a data format of the image or the video, region division information, region traversal sequence information, an image feature, or a mapping curve parameter, and one or more metadata information units. The metadata information unit includes data such as coordinate information, the image feature, and the curve parameter. The metadata may include global mapping information and local mapping information, where the local mapping information includes an initial local tone mapping curve and a feature value.

In this embodiment of this application, a tone mapping solution combining global tone mapping and local tone mapping is used. First, global tone mapping is performed to ensure consistency of overall luminance perception of an image, and then local tone mapping is performed to further improve a local contrast of the image. In addition, local tone mapping is performed based on the adjusted local mapping information. This adjustment helps balance a problem of an uncoordinated regional contrast caused by local tone mapping, and further improves local tone mapping effect. This effectively improves image display effect. An embodiment of this application further provides a tone mapping apparatus 1600. The apparatus 160 has a function of implementing the terminal display device in FIG. 4A. The function, the unit, or the means may be implemented by software, or may be implemented by hardware, or may be implemented by hardware executing corresponding software.

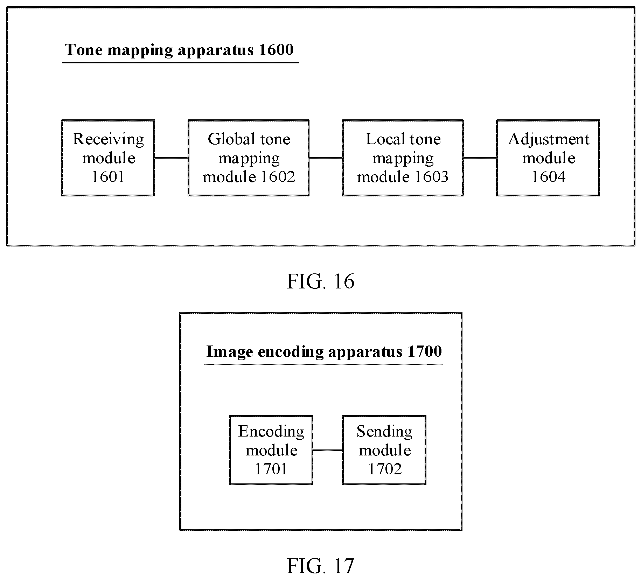

For example, refer to FIG. 16. The apparatus 1600 may include:

a receiving module 1601, configured to obtain a to-be-displayed image;
a global tone mapping module 1602, configured to perform global tone mapping on the to-be-displayed image to obtain a first tone-mapped image;

a local tone mapping module 1603, configured to obtain local mapping information of the first tone-mapped image;
an adjustment module 1604, configured to adjust the local mapping information to obtain the adjusted local mapping information; and
the local tone mapping module 1603 is further configured to perform local tone mapping on at least some pixels in the first tone-mapped image based on the adjusted local mapping information, to obtain a second tone-mapped image.

In a possible embodiment, obtaining the local mapping information of the first tone-mapped image includes: obtaining at least one initial local tone mapping curve and at least one feature value of the first tone-mapped image, where each of the at least one initial local tone mapping curve corresponds to one or more feature values.

In a possible embodiment, adjusting the local mapping information to obtain the adjusted local mapping information includes: adjusting the at least one initial local tone mapping curve based on the at least one feature value, to obtain the at least one adjusted local tone mapping curve, so that the at least one adjusted local tone mapping curve and a global tone mapping curve used for global tone mapping meet a first condition.

In a possible embodiment, the first condition includes: A mapping value obtained through mapping a first feature value by using the global tone mapping curve is a second feature value, or a value obtained through performing function transformation on a mapping value obtained through mapping a first feature value by using the global tone mapping curve is a second feature value, where the first feature value is any one of the one or more feature values; a mapping value obtained through mapping the second feature value by using the adjusted local tone mapping curve corresponding to the first feature value is a third feature value; and a difference between the second feature value and the third feature value falls within a first range.

In a possible embodiment, before adjusting the at least one initial local tone mapping curve based on the at least one feature value, the method further includes: obtaining terminal display device information; and adjusting the at least one initial local tone mapping curve based on the terminal display device information.

In a possible embodiment, obtaining the at least one feature value includes: determining at least one block region of the to-be-displayed image; collecting statistics on luminance information of each of the at least one block region; dividing the luminance information of each block region into one or more luminance segments; and using a center or a center of gravity of each of the one or more luminance segments as one of the one or more feature values.

In a possible embodiment, obtaining the local mapping information of the first tone-mapped image includes: obtaining metadata of the to-be-displayed image; and obtaining the local mapping information from the metadata.

In a possible embodiment, obtaining the local mapping information of the first tone-mapped image includes: obtaining local mapping indication information; and when the local mapping indication information indicates that local mapping is to be applied, determining preset local mapping information or calculating the local mapping information.

In a possible embodiment, the at least one adjusted local tone mapping curve is in a one-to-one correspondence with the at least one block region of the first tone-mapped image, and performing local tone mapping on the at least some pixels in the first tone-mapped image based on the adjusted local mapping information, to obtain the second tone-mapped image includes: separately performing, based on the at least one adjusted local tone mapping curve, local tone mapping on block regions respectively corresponding to the at least one adjusted local tone mapping curve, to obtain the second tone-mapped image.

In a possible embodiment, performing local tone mapping on the at least some pixels in the first tone-mapped image based on the adjusted local mapping information, to obtain the second tone-mapped image includes: determining a to-be-processed pixel of the first tone-mapped image; determining an extraction region based on the to-be-processed pixel, where the extraction region covers at least some of the at least one block region; obtaining the at least one adjusted local tone mapping curve corresponding to the at least some of the block regions; and performing local tone mapping on the to-be-processed pixel based on the at least one adjusted local tone mapping curve, to obtain the second tone-mapped image.

In a possible embodiment, performing local tone mapping on the to-be-processed pixel based on the at least one adjusted local tone mapping curve includes: performing local tone mapping on the to-be-processed pixel based on a plurality of adjusted local tone mapping curves to obtain a plurality of mapping values; and performing weighted averaging on the plurality of mapping values to obtain a mapping value of the to-be-processed pixel.

In a possible embodiment, local tone mapping includes layer-based local tone mapping, block-based local tone mapping, or a combination of layer-based local tone mapping and block-based local tone mapping.

It should be understood that all related content of the steps in the foregoing embodiment of the tone mapping method may be cited in function descriptions of corresponding function modules, and details are not described herein again.

An embodiment of this application further provides an image encoding apparatus 1700. The apparatus 1700 has a function of implementing the front-end device in FIG. 4A. For example, the function, the unit, or the means may be implemented by software, or may be implemented by hardware, or may be implemented by hardware executing corresponding software.

For example, refer to FIG. 17. The apparatus 1700 may include:

an encoding module 1701, configured to write a to-be-displayed image into a bitstream;
the encoding module 1701 is further configured to write local mapping information of the to-be-displayed image into the bitstream, where
adjusted local mapping information is used to perform local tone mapping on at least some pixels in the to-be-displayed image on which global tone mapping is performed; and
a sending module 1702, configured to send the bitstream.

In a possible embodiment, writing the local mapping information of the to-be-displayed image into the bitstream includes: writing at least one initial local tone mapping curve and at least one feature value of the to-be-displayed image into the bitstream, where each of the at least one initial local tone mapping curve corresponds to one or more feature values.

In a possible embodiment, the at least one adjusted local tone mapping curve is in a one-to-one correspondence with at least one block region of the to-be-displayed image.

In a possible embodiment, the at least one feature value is used to adjust the at least one initial local tone mapping curve to obtain the at least one adjusted local tone mapping curve, and the at least one adjusted local tone mapping curve and a global tone mapping curve used for global tone mapping meet a first condition.

In a possible embodiment, the first condition includes: A mapping value obtained through mapping a first feature value by using the global tone mapping curve is a second feature value, or a value obtained through performing function transformation on a mapping value obtained through mapping a first feature value by using the global tone mapping curve is a second feature value, where the first feature value is any one of the one or more feature values; a mapping value obtained through mapping the second feature value by using an adjusted local tone mapping curve corresponding to the first feature value is a third feature value; and a difference between the second feature value and the third feature value falls within a first range.

In a possible embodiment, the encoding module is further configured to: determine at least one block region of the to-be-displayed image; collect statistics on luminance information of each of the at least one block region; divide the luminance information of each block region into one or more luminance segments; and use a center or a center of gravity of each of the one or more luminance segments as one of the one or more feature values.

In a possible embodiment, the encoding module is further configured to write division information into the bitstream, where the division information is used to determine the at least one block region of the to-be-displayed image.

In a possible embodiment, the encoding module is further configured to write local mapping indication information into the bitstream, where the local mapping indication information indicates whether local mapping is to be applied.

In a possible embodiment, local tone mapping includes layer-based local tone mapping, block-based local tone mapping, or a combination of layer-based local tone mapping and block-based local tone mapping.

It should be understood that all related content of the steps in the foregoing embodiments of the image encoding method may be cited in function descriptions of corresponding functional modules. Details are not described herein again.

An embodiment of this application further provides an electronic device 1800, configured to implement the tone mapping method in the embodiment shown in FIG. 5.

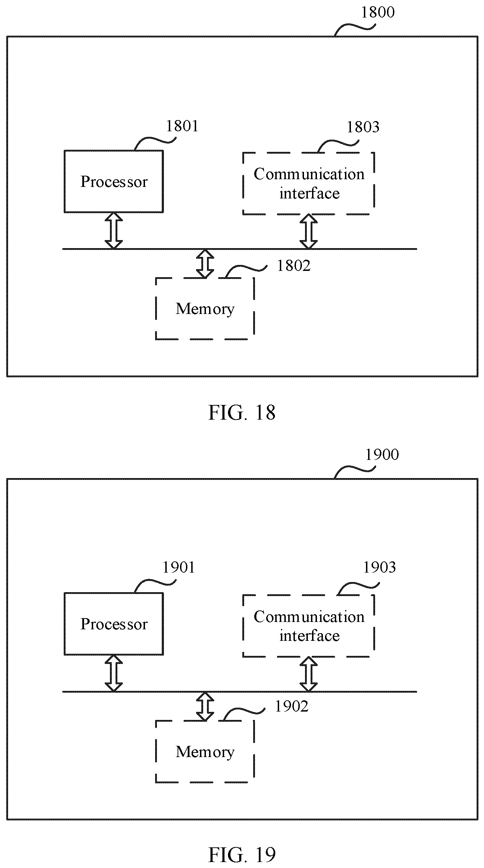

As shown in FIG. 18, the electronic device 1800 may include a processor 1801, configured to execute a program or instructions stored in the memory 1802. When the program or the instructions stored in the memory 1802 are executed, the processor is configured to perform the tone mapping method in the embodiment shown in FIG. 5.

Optionally, the electronic device 1800 may further include a communication interface 1803. In FIG. 18, a dashed line is used to indicate that the communication interface 1803 is optional for the electronic device 1800.

A quantity of processors 1801, a quantity of memories 1802, and a quantity of communication interfaces 1803 do not constitute a limitation on this embodiment of this application. During specific implementation, the quantity of processors 1801, the quantity of memories 1802, and the quantity of communication interfaces 1803 may be randomly configured based on a service requirement.

Optionally, the memory 1802 is located outside the electronic device 1800.

Optionally, the electronic device 1800 includes the memory 1802, the memory 1802 is connected to the at least one processor 1801, and the memory 1802 stores instructions that can be executed by the at least one processor 1801. In FIG. 18, a dashed line indicates that the memory 1802 is optional for the electronic device 1800.

The processor 1801 and the memory 1802 may be coupled through an interface circuit, or may be integrated together. This is not limited herein.

A specific connection medium between the processor 1801, the memory 1802, and the communication interface 1803 is not limited in this embodiment of this application. In this embodiment of this application, the processor 1801, the memory 1802, and the communication interface 1803 are connected through a bus 1804 in FIG. 18. The bus is represented by using a bold line in FIG. 18. A connection manner between other components is merely an example for description, and is not limited thereto. The bus may be classified into an address bus, a data bus, a control bus, and the like. For ease of representation, the bus is represented only by one bold line in FIG. 18. However, this does not mean that there is only one bus or only one type of bus.

An embodiment of this application further provides an electronic device 1900, configured to implement the image encoding method in the embodiment shown in FIG. 15.

As shown in FIG. 19, the electronic device 1900 may include a processor 1901, configured to execute a program or instructions stored in the memory 1902. When the program or the instructions stored in the memory 1902 are executed, the processor 1901 is configured to perform the image encoding method in the embodiment shown in FIG. 15.

Optionally, the electronic device 1900 may further include a communication interface 1903. In FIG. 19, a dashed line is used to indicate that the communication interface 1903 is optional for the electronic device 1900.

A quantity of processors 1901, a quantity of memories 1902, and a quantity of communication interfaces 1903 do not constitute a limitation on this embodiment of this application. During specific implementation, the quantity of processors 1901, the quantity of memories 1902, and the quantity of communication interfaces 1903 may be randomly configured based on a service requirement.

Optionally, the memory 1902 is located outside the electronic device 1900.

Optionally, the electronic device 1900 includes the memory 1902, the memory 1902 is connected to the at least one processor 1901, and the memory 1902 stores instructions that can be executed by the at least one processor 1901. In FIG. 19, a dashed line indicates that the memory 1902 is optional for the electronic device 1900.

The processor 1901 and the memory 1902 may be coupled through an interface circuit, or may be integrated together. This is not limited herein.

A specific connection medium between the processor 1901, the memory 1902, and the communication interface 1903 is not limited in this embodiment of this application. In this embodiment of this application, the processor 1901, the memory 1902, and the communication interface 1903 are connected through a bus 1904 in FIG. 19. The bus is represented by using a bold line in FIG. 19. A connection manner between other components is merely an example for description, and is not limited thereto. The bus may be classified into an address bus, a data bus, a control bus, and the like. For ease of representation, the bus is represented only by one bold line in FIG. 19. However, this does not mean that there is only one bus or only one type of bus.

It should be understood that the processor mentioned in embodiments of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct Rambus RAM, DR RAM).

It should be noted that when the processor is a general-purpose processor, a DSP, an ASIC, an FPGA or another programmable logical device, a discrete gate or a transistor logical device, or a discrete hardware component, the memory (a storage module) may be integrated into the processor.

It should be noted that the memory described in this specification aims to include but is not limited to these memories and any memory of another proper type.

An embodiment of this application further provides a computer-readable storage medium, including a program or instructions. When the program or the instructions are run on a computer, the tone mapping method in the embodiment shown in FIG. 5 or the image encoding method in the embodiment shown in FIG. 15 is performed.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-readable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. In this case, if the modifications and variations made to this application fall within the scope of the claims of this application and equivalent technologies thereof, this application is intended to cover these modifications and variations.

**Claims**

1. A tone mapping method, wherein the method comprises:

   obtaining a to-be-displayed image;
   performing global tone mapping on the to-be-displayed image to obtain a first tone-mapped image;
   obtaining local mapping information of the first tone-mapped image;
   adjusting the local mapping information to obtain the adjusted local mapping information; and
   performing local tone mapping on at least some pixels in the first tone-mapped image based on the adjusted local mapping information, to obtain a second tone-mapped image.

2. The method according to claim 1, wherein obtaining the local mapping information of the first tone-mapped image comprises:
   obtaining at least one initial local tone mapping curve and at least one feature value of the first tone-mapped image, wherein each of the at least one initial local tone mapping curve corresponds to one or more feature values.

3. The method according to claim 2, wherein adjusting the local mapping information to obtain the adjusted local mapping information comprises:
   adjusting the at least one initial local tone mapping curve based on the at least one feature value, to obtain the at least one adjusted local tone mapping curve, so that the at least one adjusted local tone mapping curve and a global tone mapping curve used for global tone mapping meet a first condition.

4. The method according to claim 3, wherein the first condition comprises:

   a mapping value obtained through mapping a first feature value by using the global tone mapping curve is a second feature value, or a value obtained through performing function transformation on a mapping value obtained through mapping a first feature value by using the global tone mapping curve is a second feature value, wherein the first feature value is any one of the one or more feature values;
   a mapping value obtained through mapping the second feature value by using the adjusted local tone mapping curve corresponding to the first feature value is a third feature value; and

a difference between the second feature value and the third feature value falls within a first range.

5. The method according to claim 3, wherein before adjusting the at least one initial local tone mapping curve based on the at least one feature value, the method further comprises:

   obtaining terminal display device information; and
   adjusting the at least one initial local tone mapping curve based on the terminal display device information.

6. The method according to any one of claims 2 to 5, wherein obtaining the at least one feature value comprises:

   determining at least one block region of the to-be-displayed image;
   collecting statistics on luminance information of each of the at least one block region;
   dividing the luminance information of each block region into one or more luminance segments; and
   using a center or a center of gravity of each of the one or more luminance segments as one of the one or more feature values.

7. The method according to any one of claims 1 to 6, wherein obtaining the local mapping information of the first tone-mapped image comprises:

   obtaining metadata of the to-be-displayed image; and
   obtaining the local mapping information from the metadata.

8. The method according to any one of claims 1 to 7, wherein obtaining the local mapping information of the first tone-mapped image comprises:

   obtaining local mapping indication information; and
   when the local mapping indication information indicates that local mapping is to be applied, determining preset local mapping information or calculating the local mapping information.

9. The method according to any one of claims 1 to 8, wherein the at least one adjusted local tone mapping curve is in a one-to-one correspondence with the at least one block region of the first tone-mapped image, and performing local tone mapping on the at least some pixels in the first tone-mapped image based on the adjusted local mapping information, to obtain the second tone-mapped image comprises:
   separately performing, based on the at least one adjusted local tone mapping curve, local tone mapping on block regions respectively corresponding to the at least one adjusted local tone mapping curve, to obtain the second tone-mapped image.

10. The method according to any one of claims 1 to 9, wherein performing local tone mapping on the at least some pixels in the first tone-mapped image based on the adjusted local mapping information, to obtain the second tone-mapped image comprises:

    determining a to-be-processed pixel of the first tone-mapped image;
    determining an extraction region based on the to-be-processed pixel, wherein the extraction region covers at least some of the at least one block region;
    obtaining the at least one adjusted local tone mapping curve corresponding to the at least some of the block regions; and
    performing local tone mapping on the to-be-processed pixel based on the at least one adjusted local tone mapping curve, to obtain the second tone-mapped image.

11. The method according to claim 10, wherein performing local tone mapping on the to-be-processed pixel based on the at least one adjusted local tone mapping curve comprises:

    performing local tone mapping on the to-be-processed pixel based on a plurality of adjusted local tone mapping curves to obtain a plurality of mapping values; and
    performing weighted averaging on the plurality of mapping values to obtain a mapping value of the to-be-processed pixel.

12. The method according to any one of claims 1 to 11, wherein local tone mapping comprises:

layer-based local tone mapping, block-based local tone mapping, or a combination of layer-based local tone mapping and block-based local tone mapping.

13. An image encoding method, wherein the method comprises:

writing a to-be-displayed image into a bitstream; and
writing local mapping information of the to-be-displayed image into the bitstream, wherein
adjusted local mapping information is used to perform local tone mapping on at least some pixels in the to-be-displayed image on which global tone mapping is performed.

14. The method according to claim 13, wherein writing the local mapping information of the to-be-displayed image into the bitstream comprises:
writing at least one initial local tone mapping curve and at least one feature value of the to-be-displayed image into the bitstream, wherein each of the at least one initial local tone mapping curve corresponds to one or more feature values.

15. The method according to claim 14, wherein
the at least one adjusted local tone mapping curve is in a one-to-one correspondence with at least one block region of the to-be-displayed image.

16. The method according to claim 14 or 15, wherein
the at least one feature value is used to adjust the at least one initial local tone mapping curve to obtain the at least one adjusted local tone mapping curve, and the at least one adjusted local tone mapping curve and a global tone mapping curve used for global tone mapping meet a first condition.

17. The method according to claim 16, wherein the first condition comprises:

a mapping value obtained through mapping a first feature value by using the global tone mapping curve is a second feature value, or a value obtained through performing function transformation on a mapping value obtained through mapping a first feature value by using the global tone mapping curve is a second feature value, wherein the first feature value is any one of the one or more feature values;
a mapping value obtained through mapping the second feature value by using the adjusted local tone mapping curve corresponding to the first feature value is a third feature value; and
a difference between the second feature value and the third feature value falls within a first range.

18. The method according to any one of claims 13 to 17, wherein the method further comprises:

determining at least one block region of the to-be-displayed image;
collecting statistics on luminance information of each of the at least one block region;
dividing the luminance information of each block region into one or more luminance segments; and
using a center or a center of gravity of each of the one or more luminance segments as one of the one or more feature values.

19. The method according to claim 18, wherein the method further comprises:
writing division information into the bitstream, wherein the division information is used to determine the at least one block region of the to-be-displayed image.

20. The method according to any one of claims 13 to 19, wherein the method further comprises:
writing local mapping indication information into the bitstream, wherein the local mapping indication information indicates whether local mapping is to be applied.

21. The method according to any one of claims 13 to 20, wherein local tone mapping comprises:
layer-based local tone mapping, block-based local tone mapping, or a combination of layer-based local tone mapping and block-based local tone mapping.

22. A tone mapping apparatus, comprising:

a receiving module, configured to obtain a to-be-displayed image;
a global tone mapping module, configured to perform global tone mapping on the to-be-displayed image to obtain a first tone-mapped image;
a local tone mapping module, configured to obtain local mapping information of the first tone-mapped image; and
an adjustment module, configured to adjust the local mapping information to obtain the adjusted local mapping information, wherein
the local tone mapping module is further configured to perform local tone mapping on at least some pixels in the first tone-mapped image based on the adjusted local mapping information, to obtain a second tone-mapped image.

23. The apparatus according to claim 22, wherein obtaining the local mapping information of the first tone-mapped image comprises:
obtaining at least one initial local tone mapping curve and at least one feature value of the first tone-mapped image, wherein each of the at least one initial local tone mapping curve corresponds to one or more feature values.

24. The apparatus according to claim 23, wherein adjusting the local mapping information to obtain the adjusted local mapping information comprises:
adjusting the at least one initial local tone mapping curve based on the at least one feature value, to obtain the at least one adjusted local tone mapping curve, so that the at least one adjusted local tone mapping curve and a global tone mapping curve used for global tone mapping meet a first condition.

25. The apparatus according to claim 24, wherein the first condition comprises:

a mapping value obtained through mapping a first feature value by using the global tone mapping curve is a second feature value, or a value obtained through performing function transformation on a mapping value obtained through mapping a first feature value by using the global tone mapping curve is a second feature value, wherein the first feature value is any one of the one or more feature values;
a mapping value obtained through mapping the second feature value by using the adjusted local tone mapping curve corresponding to the first feature value is a third feature value; and
a difference between the second feature value and the third feature value falls within a first range.

26. The apparatus according to claim 24, wherein before adjusting the at least one initial local tone mapping curve based on the at least one feature value, the method further comprises:

obtaining terminal display device information; and
adjusting the at least one initial local tone mapping curve based on the terminal display device information.

27. The apparatus according to any one of claims 23 to 26, wherein obtaining the at least one feature value comprises:

determining at least one block region of the to-be-displayed image;
collecting statistics on luminance information of each of the at least one block region;
dividing the luminance information of each block region into one or more luminance segments; and
using a center or a center of gravity of each of the one or more luminance segments as one of the one or more feature values.

28. The apparatus according to any one of claims 22 to 27, wherein obtaining the local mapping information of the first tone-mapped image comprises:

obtaining metadata of the to-be-displayed image; and
obtaining the local mapping information from the metadata.

29. The apparatus according to any one of claims 22 to 28, wherein obtaining the local mapping information of the first tone-mapped image comprises:

obtaining local mapping indication information; and
when the local mapping indication information indicates that local mapping is to be applied, determining preset local mapping information or calculating the local mapping information.

30. The apparatus according to any one of claims 22 to 29, wherein the at least one adjusted local tone mapping curve is in a one-to-one correspondence with the at least one block region of the first tone-mapped image, and performing local tone mapping on the at least some pixels in the first tone-mapped image based on the adjusted local mapping information, to obtain the second tone-mapped image comprises:

separately performing, based on the at least one adjusted local tone mapping curve, local tone mapping on block regions respectively corresponding to the at least one adjusted local tone mapping curve, to obtain the second tone-mapped image.

31. The apparatus according to any one of claims 22 to 30, wherein performing local tone mapping on the at least some pixels in the first tone-mapped image based on the adjusted local mapping information, to obtain the second tone-mapped image comprises:

determining a to-be-processed pixel of the first tone-mapped image;
determining an extraction region based on the to-be-processed pixel, wherein the extraction region covers at least some of the at least one block region;
obtaining the at least one adjusted local tone mapping curve corresponding to the at least some of the block regions; and
performing local tone mapping on the to-be-processed pixel based on the at least one adjusted local tone mapping curve, to obtain the second tone-mapped image.

32. The apparatus according to claim 31, wherein performing local tone mapping on the to-be-processed pixel based on the at least one adjusted local tone mapping curve comprises:

performing local tone mapping on the to-be-processed pixel based on a plurality of adjusted local tone mapping curves to obtain a plurality of mapping values; and
performing weighted averaging on the plurality of mapping values to obtain a mapping value of the to-be-processed pixel.

33. The apparatus according to any one of claims 22 to 32, wherein local tone mapping comprises:

layer-based local tone mapping, block-based local tone mapping, or a combination of layer-based local tone mapping and block-based local tone mapping.

34. An image encoding apparatus, comprising:

an encoding module, configured to: write a to-be-displayed image into a bitstream; and
further write local mapping information of the to-be-displayed image into the bitstream, wherein
adjusted local mapping information is used to perform local tone mapping on at least some pixels in the to-be-displayed image on which global tone mapping is performed; and
a sending module, configured to send the bitstream.

35. The apparatus according to claim 34, wherein writing the local mapping information of the to-be-displayed image into the bitstream comprises:
writing at least one initial local tone mapping curve and at least one feature value of the to-be-displayed image into the bitstream, wherein each of the at least one initial local tone mapping curve corresponds to one or more feature values.

36. The apparatus according to claim 35, wherein
the at least one adjusted local tone mapping curve is in a one-to-one correspondence with at least one block region of the to-be-displayed image.

37. The apparatus according to claim 35 or 36, wherein
the at least one feature value is used to adjust the at least one initial local tone mapping curve to obtain the at least one adjusted local tone mapping curve, and the at least one adjusted local tone mapping curve and a global tone mapping curve used for global tone mapping meet a first condition.

38. The apparatus according to claim 37, wherein the first condition comprises:

a mapping value obtained through mapping a first feature value by using the global tone mapping curve is a second feature value, or a value obtained through performing function transformation on a mapping value obtained through mapping a first feature value by using the global tone mapping curve is a second feature value, wherein the first feature value is any one of the one or more feature values;
a mapping value obtained through mapping the second feature value by using the adjusted local tone mapping curve corresponding to the first feature value is a third feature value; and
a difference between the second feature value and the third feature value falls within a first range.

39. The apparatus according to any one of claims 34 to 38, wherein the encoding module is further configured to:

determine at least one block region of the to-be-displayed image;
collect statistics on luminance information of each of the at least one block region;
divide the luminance information of each block region into one or more luminance segments; and
use a center or a center of gravity of each of the one or more luminance segments as one of the one or more feature values.

40. The apparatus according to claim 39, wherein the encoding module is further configured to:
write division information into the bitstream, wherein the division information is used to determine the at least one block region of the to-be-displayed image.

41. The apparatus according to any one of claims 34 to 40, wherein the encoding module is further configured to:
write local mapping indication information into the bitstream, wherein the local mapping indication information indicates whether local mapping is to be applied.

42. The apparatus according to any one of claims 34 to 41, wherein local tone mapping comprises:
layer-based local tone mapping, block-based local tone mapping, or a combination of layer-based local tone mapping and block-based local tone mapping.

43. An electronic device, comprising a memory and a processor that are coupled to each other, wherein the processor invokes program code stored in the memory to perform the method according to any one of claims 1 to 12 or claims 13 to 21.

44. A computer-readable storage medium, wherein the computer-readable storage medium stores a computer program, and when the computer program is run on a computer or a processor, the method according to any one of claims 1 to 12 or claims 13 to 21 is implemented.

45. A computer program product, comprising a program or instructions, wherein when the program or the instructions are run on a computer or a processor, the computer or the processor is enabled to perform the method according to any one of claims 1 to 12 or claims 13 to 21.

EP 4 637 134 A1

Encoding and
decoding
system 10

Image
data 17

Pre-processed
image data 19

Encoded
image data 21

Source device 12

Image source 16

Pre-processor
18

Encoder 20

Communication
interface 22

Communication
channel 13

Destination device 14

Display device
34

Post-processor
32

Decoder 30

Communication
interface 28

Post-processed
image data 33

Decoded
image data 31

Encoded
image data 21

FIG. 1

2106

Terminal device

Smartphone/Tablet
computer 2108

Computer/Laptop
computer 2110

Network video recorder/
Digital video recorder 2112

Television 2114

Set top box 2116

Video conferencing system
2118

Video surveillance system
2120

Personal digital assistant
2122

Vehicle-mounted device
2124

...

2102

Capture device

2104

2126

Display

FIG. 2A

FIG. 2B

```
┌──────────┐      ┌──────────────┐      ┌──────────────┐      ┌──────────────┐      ┌──────────────┐
│  Video   │      │ Video stream │      │ Video stream │      │ Video stream │      │   Content    │
│ encoding │─────▶│ transmission │─────▶│ transcoding  │─────▶│ encapsulation│─────▶│ distribution │
│          │      │              │      │              │      │              │      │   network    │
└──────────┘      └──────────────┘      └──────────────┘      └──────────────┘      └──────────────┘
     ▲                   │                      │                    ▲                     │
     │                   │                      ▼                    │                     ▼
┌──────────┐             │              ┌──────────────┐             │              ┌──────────────┐
│ Content  │             │              │ Video stream │             │              │              │
│ creation │             └─────────────▶│   storage    │─────────────┘              │ OTT devices  │
│          │                            │              │                            │              │
└──────────┘                            └──────────────┘                            └──────────────┘
```

FIG. 3A

FIG. 3B

FIG. 4A

FIG. 4B

| | |
|---|---|
| Obtain a to-be-displayed image | S501 |

↓

| | |
|---|---|
| Perform global tone mapping on the to-be-displayed image to obtain a first tone-mapped image | S502 |

↓

| | |
|---|---|
| Obtain local mapping information of the first tone-mapped image | S503 |

↓

| | |
|---|---|
| Adjust the local mapping information to obtain the adjusted local mapping information | S504 |

↓

| | |
|---|---|
| Perform local tone mapping on at least some pixels in the first tone-mapped image based on the adjusted local mapping information, to obtain a second tone-mapped image | S505 |

FIG. 5

| | |
|---|---|
| Determine at least one block region of a first tone-mapped image | S5031 |

↓

| | |
|---|---|
| Collect statistics on luminance information of each of the at least one block region | S5032 |

↓

| | |
|---|---|
| Divide luminance information of each block region into one or more luminance segments | S5033 |

↓

| | |
|---|---|
| Use a center or a center of gravity of each of the one or more luminance segments as one of one or more feature values | S5034 |

FIG. 6

FIG. 7

FIG. 8

FIG. 9

FIG. 10

Determine a to-be-processed pixel of a first tone-mapped image ~ S3051

Determine an extraction region based on the to-be-processed pixel, where the extraction region covers at least some of at least one block region ~ S3052

Obtain at least one adjusted local tone mapping curve corresponding to the at least some of the block regions ~ S3053

Perform local tone mapping on the to-be-processed pixel based on the at least one adjusted local tone mapping curve, to obtain a second tone-mapped image ~ S3054

FIG. 11

| 1 | 2 | 3 | 4 | 5 | 6 |
| 7 | 8 | 9 | 10 | 11 | 12 |
| 13 | 14 | 15 | 16 | 17 | 18 |
| 19 | 20 | 21 | 22 | 23 | 24 |
| 25 | 26 | 27 | 28 | 29 | 30 |

1202    1201
1203    1204

1205    1206
1207    1208

FIG. 12

For a first tone-mapped image, obtain a plurality of layers, and extract data of the plurality of layers ~ S1301

Obtain, based on preset information or information transferred by metadata, layer-based local tone mapping information respectively used by the plurality of layers, and perform tone mapping for each layer ~ S1302

For the plurality of layers, combine gain information that is preset or that is sent by the metadata to obtain a final mapping value ~ S1303

FIG. 13

For a first tone-mapped image, obtain a plurality of layers, and extract data of the plurality of layers ~ S1401

Obtain local mapping information of at least one block region of each of the plurality of layers based on preset information or information transferred by metadata, and perform block-based local tone mapping for each layer ~ S1402

For the plurality of layers, combine gain information that is preset or that is sent by the metadata to obtain a final mapping value ~ S1403

FIG. 14

Write a to-be-displayed image into a bitstream ~ S1501

Write local mapping information of the to-be-displayed image into the bitstream ~ S1502

FIG. 15

**Tone mapping apparatus 1600**

| Receiving module 1601 | Global tone mapping module 1602 | Local tone mapping module 1603 | Adjustment module 1604 |
|---|---|---|---|

FIG. 16

**Image encoding apparatus 1700**

| Encoding module 1701 | Sending module 1702 |
|---|---|

FIG. 17

1800

Processor 1801

Communication interface 1803

Memory 1802

FIG. 18

1900

Processor 1901

Communication interface 1903

Memory 1902

FIG. 19

## INTERNATIONAL SEARCH REPORT

| International application No. |
|---|
| **PCT/CN2024/075284** |

### A. CLASSIFICATION OF SUBJECT MATTER

H04N 9/68(2023.01)i; H04N 9/64(2023.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, CNKI, VEN, WPABS, ENTXT: 色调, 映射, 全局, 局部, 区域, 初始, 初步, 调整, 曲线, 特征值, 亮度, 差值, 范围, 条件, 约束, 限制, 阈值, tone, map, global, local, area, region, initial, adjust, curve, feature, brightness, luminance, difference, range, condition, restrict, limit, threshold

### C. DOCUMENTS CONSIDERED TO BE RELEVANT

| Category* | Citation of document, with indication, where appropriate, of the relevant passages | Relevant to claim No. |
|---|---|---|
| X | CN 104185991 A (FRAUNHOFER-GESELLSCHAFT ZUR FOERDERUNG DER ANGEWANDTEN FORSCHUNG E.V.) 03 December 2014 (2014-12-03) description, paragraphs [0017]-[0020], [0026], [0028], [0033], and [0151]-[0163] | 1-2, 6-15, 18-23, 27-36, 39-45 |
| Y | CN 104185991 A (FRAUNHOFER-GESELLSCHAFT ZUR FOERDERUNG DER ANGEWANDTEN FORSCHUNG E.V.) 03 December 2014 (2014-12-03) description, paragraphs [0017]-[0020], [0026], [0028], [0033], and [0151]-[0163] | 3-5, 16-17, 24-26, 37-38 |
| Y | US 2016070974 A1 (APPLE INC.) 10 March 2016 (2016-03-10) description, paragraphs [0015]-[0016] | 3-5, 16-17, 24-26, 37-38 |
| Y | CN 110246470 A (SAMSUNG DISPLAY CO., LTD.) 17 September 2019 (2019-09-17) description, paragraphs [0063] and [0072]-[0073] | 4, 17, 25, 38 |
| A | JP 2018128764 A (CANON K. K.) 16 August 2018 (2018-08-16) entire document | 1-45 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 May 2024** | **10 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/075284**

| Patent document cited in search report | | | Publication date (day/month/year) | Patent family member(s) | | | Publication date (day/month/year) |
|---|---|---|---|---|---|---|---|
| CN | 104185991 | A | 03 December 2014 | RU | 2014122981 | A | 20 December 2015 |
| | | | | RU | 2586837 | C2 | 10 June 2016 |
| | | | | IN | KON2014A | | 09 October 2015 |
| | | | | EP | 2777252 | A1 | 17 September 2014 |
| | | | | EP | 2777252 | B1 | 10 February 2016 |
| | | | | JP | 2015502061 | A | 19 January 2015 |
| | | | | JP | 5964446 | B2 | 03 August 2016 |
| | | | | WO | 2013068132 | A1 | 16 May 2013 |
| | | | | BR | 112014011151 | A2 | 13 June 2017 |
| | | | | BR | 112014011151 | B1 | 07 February 2023 |
| | | | | US | 2014241418 | A1 | 28 August 2014 |
| | | | | US | 9712816 | B2 | 18 July 2017 |
| US | 2016070974 | A1 | 10 March 2016 | US | 9418311 | B2 | 16 August 2016 |
| CN | 110246470 | A | 17 September 2019 | KR | 20190107242 | A | 19 September 2019 |
| | | | | KR | 102465313 | B1 | 09 November 2022 |
| | | | | US | 2019279343 | A1 | 12 September 2019 |
| | | | | US | 10664959 | B2 | 26 May 2020 |
| JP | 2018128764 | A | 16 August 2018 | None | | | |

Form PCT/ISA/210 (patent family annex) (July 2022)

**EP 4 637 134 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310172429